# EUROPÄISCHE PATENTANMELDUNG

(11) **EP 3 972 097 A1**
(43) Veröffentlichungstag der Anmeldung: **23.03.2022**
(21) Anmeldenummer: 21000264.8
(22) Anmeldetag: 21.09.2021
(51) Int. Cl.: H02K 11/40, H01R 39/12, H01R 39/64, H02K 7/00

(54) **WELLENERDUNGSEINRICHTUNG SOWIE VERFAHREN ZU IHRER HERSTELLUNG**

(30) Priorität: 22.09.2020 DE 102020005933; 17.09.2021 DE 102021004802
(71) Anmelder: KACO GmbH + Co. KG, 74912 Kirchardt (DE)
(72) Erfinder: Teller, Marcus, 74078 Heilbronn (DE); Von Olnhausen, Dennis, 74357 Bönnigheim (DE); Wunder, Wilhelm, 74360 Ilsfeld (DE); Palmer, Matthias, 74918 Angelbachtal (DE); Paul, Andreas, 74199 Untergruppenbach (DE); Filusch, Damian, 74254 Löwenstein (DE); Lenz, Roland, 74257 Untereisesheim (DE); Genesius, Andreas, 74076 Heilbronn (DE); Rosenthal, Isabell, 74235 Erlenbach (DE)
(74) Vertreter: Kohl, Karl-Heinz

(57) **Zusammenfassung**

Die Wellenerdungseinrichtung dient zur Ableitung induzierter Spannungen, Ströme oder elektrischer Ladungen von einem ersten Maschinenelement, vorzugsweise einer Welle, in ein zweites Maschinenelement. Die Wellenerdungseinrichtung hat zur Ableitung wenigstens ein Wellenerdungselement (4), das ein von einem Ausgangsmaterial, vorzugsweise einer Endlosware, abgelängtes Bauteil ist. Es ist in seiner Längsrichtung von Kanälen (16) durchzogen oder zumindest an seiner Berührfläche mit dem ersten Maschinenelement mit einer Perforierung und/oder einer Oberflächenstruktur und/oder einer Oberflächentextur versehen.

## Beschreibung

Die Erfindung betrifft eine Wellenerdungseinrichtung nach dem Oberbegriff des Anspruches 1 sowie ein Verfahren nach Anspruch 15.

Um elektrische Ladungen bzw. Spannungen/Ströme von Wellen elektrischer Antriebe abzuleiten, sind Wellenerdungsringe bekannt (EP 1 872 463 B1), die als Ableitelemente Filamente aufweisen, die zwischen zwei Platten befestigt sind und radial nach innen über die Platten vorstehen. Diese Platten und die Filamente sind in einem ringförmigen Gehäuse aufgenommen, das elektrisch leitend mit einem geerdeten Gehäuse verbunden ist. Der Einsatz der leitfähigen Filamente erfordert eine aufwändige und somit teure Herstellung des Wellenerdungsringes. Im Einsatz besteht die Gefahr, dass sich die Filamente lösen und zu einer Verunreinigung und gegebenenfalls zu Schäden des gesamten Systems bis hin zu einem Gesamtausfall führen.

Die elektrisch leitenden Filamente haben häufig eine zu geringe elektrische Leitfähigkeit zwischen der rotierenden Welle und dem Gehäuse wegen zu hoher Widerstände. Auch bestehen Nachteile der Filamente im Hinblick auf das Langzeitverhalten unter erschwerten technischen Bedingungen. So können die Filamente brechen und dadurch beispielsweise Dichtungen beschädigen oder zerstören.

Zudem ist bei Einsatz der Filamente auch ein Drehrichtungswechsel der Welle problematisch, weil die Filamente die Drehrichtungsumkehr nur schwierig durch entsprechende Verstellung nachvollziehen können.

Der Erfindung liegt die Aufgabe zugrunde, die gattungsgemäße Wellenerdungseinrichtung und das gattungsgemäße Verfahren so auszubilden, dass bei einfacher und kostengünstiger Fertigung eine zuverlässige Ableitung der elektrischen Ladungen bzw. elektrischen Spannungen über eine lange Einsatzdauer hinweg gewährleistet.

Diese Aufgabe wird bei der gattungsgemäßen Wellenerdungseinrichtung erfindungsgemäß mit den kennzeichnenden Merkmalen des Anspruches 1 und beim gattungsgemäßen Verfahren erfindungsgemäß mit den Merkmalen des Anspruches 15 gelöst.

Das Wellenerdungselement der erfindungsgemäßen Wellenerdungseinrichtung besteht nicht mehr aus einzelnen Filamenten, sondern aus einem abgetrennten Bauteil, das vorzugsweise von einer Endlosware abgetrennt wird. Diese Gestaltung des Wellenerdungselementes ermöglicht eine einfache und kostengünstige Herstellung und Montage. Das Wellenerdungselement muss lediglich in der erforderlichen Länge abgetrennt und anschließend eingebaut werden. Da keine einzelnen Filamente vorhanden sind, können sich keine Einzelteile des Wellenerdungselementes lösen. Dadurch tritt keine oder allenfalls nur eine sehr geringe vernachlässigbare Verschmutzung durch das Wellenerdungselement beim Einsatz auf. Im Bedarfsfall kann das Wellenerdungselement einfach ausgetauscht werden.

Das Wellenerdungselement ist so gestaltet, dass es in seiner Längsrichtung verlaufende Kanäle aufweist oder zumindest an seiner Berührfläche mit dem ersten Maschinenelement mit einer Perforierung und/oder Oberflächenstruktur und/oder Oberflächentextur versehen ist. Die Kanäle sind durch das Material des Wellenerdungselementes voneinander getrennt und können beliebige Querschnittsform haben. Als Material für ein solches Wellenerdungselement kommt jedes elektrisch leitfähige elastische Material, beispielsweise leitfähiges PTFE, oder ein leitfähiges Elastomer in Betracht. Weiterhin sind auch nicht elektrisch leitfähige elastische Materialien denkbar. Diese sind dann mit einer elektrisch leitfähigen Beschichtung versehen.

Wenn das Wellenerdungselement die in seiner Längsrichtung verlaufenden Kanäle aufweist, dann ist es von Vorteil, wenn bereits das Ausgangsmaterial mit diesen in Längsrichtung verlaufenden Kanälen versehen ist. Dann kann das Wellenerdungselement nach dem Abtrennen bereits eingesetzt werden.

Das Wellenerdungselement kann auch so ausgebildet sein, dass es zumindest an seiner Berührfläche mit dem ersten Maschinenelement mit einer Perforierung und/oder einer Oberflächenstruktur und/oder einer Oberflächentextur versehen ist. Die Perforierung, Oberflächenstruktur bzw. Oberflächentextur können bereits am Ausgangsmaterial vorgesehen oder erst nach dem Abtrennen vom Ausgangsmaterial am Wellenerdungselement angebracht werden. Diese nachträgliche Bearbeitung ist vor allem dann notwendig, wenn das Wellenerdungselement ringscheibenförmig ausgebildet ist und von einem Rohr abgetrennt wird.

Das Wellenerdungselement kann so ausgebildet sein, dass es mit einem ausreichenden Traganteil die Lauffläche des ersten Maschinenelementes berührt und dadurch einen möglichst geringen konstanten Widerstand erzielt. Der Berühranteil zwischen dem Wellenerdungselement und dem ersten Maschinenteil kann beispielsweise durch Strukturen in der leitenden Schicht erhöht oder reduziert werden. Beispielhaft können die Strukturen auf der Oberfläche des Wellenerdungselements so geformt sein, dass sich eine abweisende Förderwirkung gegenüber Schmutz und Flüssigkeit ergibt, wenn das Wellenerdungselement im Nassbereich eingesetzt wird. Auch kann beispielsweise die Perforation und eine Prägestruktur so ausgeführt werden, dass der für die Ableitung vorgesehene Traganteil über die Laufzeit der Wellenerdungseinrichtung erhalten bleibt.

Vorteilhaft ist es, wenn die Oberflächenstruktur durch Poren gebildet ist. Mit ihnen lässt sich der Berühranteil zwischen dem Wellenerdungselement und dem ersten Maschinenelement besonders einfach und genau einstellen.

Bei einer bevorzugten Ausführungsform durchsetzen die Poren das Wellenerdungselement, das dadurch eine schwammartige Struktur erhält.

Vorteilhaft ist das Wellenerdungselement ein strangförmiges Bauteil. Es kann als ein einteiliges schnurähnliches Bauteil angesehen werden, das für die jeweilige Anwendung nur in der Länge konfektioniert wird. Dadurch kann das Wellenerdungselement sehr einfach gelagert werden, zum Beispiel auf einer Rolle. Dann lässt sich das Wellenerdungselement für unterschiedlichste Einsätze in der erforderlichen Länge einfach abtrennen und einbauen.

Bei einer vorteilhaften Ausführungsform ist das strangförmige Bauteil ein Hohlkörper.

Der Hohlkörper kann vorteilhaft mit einem Medium gefüllt sein, das aus elektrisch leitfähigem oder nicht leitfähigem Material bestehen kann. Bei elektrisch leitendem Medium kann der Übergangswiderstand zwischen dem Hohlkörper und dem Medium erheblich verringert werden, so dass die Ableitung der elektrischen Spannungen, Ströme oder Ladungen verbessert wird.

Das strangförmige Bauteil selbst kann aus elektrisch leitfähigem Material bestehen. Ebenso ist es möglich, den Hohlkörper aus nicht leitfähigem Material herzustellen. In diesem Falle ist der Hohlkörper mit einer elektrisch leitenden Beschichtung versehen.

Bei einer anderen vorteilhaften Ausführungsform besteht das strangförmige Bauteil aus Vollmaterial. Es kann einfach hergestellt und beispielsweise auf eine Rolle gewickelt werden. Sowohl das Vollmaterial als auch der Hohlkörper selbst sind elastisch biegbar, so dass das Wellenerdungselement nach dem Abtrennen in die gewünschte Form elastisch gebogen werden kann.

Es besteht die Möglichkeit, das Wellenerdungselement so einzubauen, dass es an einer Stirnseite der Welle anliegt.

Hierbei ist vorteilhaft, wenn das Wellenerdungselement in einem Halter angeordnet ist und zwischen einer Halterwand und der Stirnseite der Welle liegt. Dadurch wird das Wellenerdungselement durch die Welle im Halter axial gesichert, so dass gesonderte Sicherungsteile für das Wellenerdungselement nicht erforderlich sind.

In der Einbaulage kann das Wellenerdungselement durch die Welle axial elastisch verformt sein, so dass ein für die Ableitung einwandfreier Kontakt zwischen dem Wellenerdungselement und der Welle gegeben ist.

Es ist auch möglich, das Wellenerdungselement im Halter so anzuordnen, dass es durch ein mit dem Halter verbundenes Sicherungselement in der Einbaulage gehalten ist. In diesem Falle liegt das Wellenerdungselement am Umfang der Welle an, die sich durch den Halter erstreckt.

Das Sicherungselement kann bei einer anderen vorteilhaften Ausbildung auch mittels Federkraft gegen das Wellenerdungselement im Halter belastet sein. Die Federkraft wird vorteilhaft so eingestellt, dass das Wellenerdungselement elastisch teilweise zusammengedrückt wird. Dies hat zur Folge, dass das Wellenerdungselement infolge der axialen Verformung sich radial nach innen verengt und dadurch unter ausreichender Radialkraft am Umfang der Welle anliegt, wodurch der für die Ableitung optimale Anpressdruck eingestellt werden kann.

In vorteilhafter Ausbildung liegt das Wellenerdungselement unter elastischer Verformung an einer Ringwand des Halters an. Das abgetrennte Wellenerdungselement wird elastisch so gebogen, dass es in den Halter eingelegt werden kann. Anschließend federt das Wellenerdungselement elastisch auf und liegt dann unter Radialkraft an der Ringwand des Halters an.

Bei einer weiteren vorteilhaften Ausbildung hat die Welle am Umfang wenigstens eine Ringnut, in welche das Wellenerdungselement eingelegt ist. Die Ringnut hat eine solche Tiefe, dass das Wellenerdungselement aus der Ringnut vorsteht und in leitendem Kontakt mit dem die Welle umgebenden Gehäuse steht.

Vorteilhaft besteht die Möglichkeit, das Wellenerdungselement als schwammartigen Ring auszubilden. Er kann mit einer elektrisch leitenden Beschichtung versehen sein. Grundsätzlich ist es aber ausreichend, wenn das Material des Wellenerdungselementes selbst aus elektrisch leitendem Material besteht.

Bei einer anderen vorteilhaften Ausbildung wird das Wellenerdungselement durch ein Gewebeschlauchstück gebildet, das zumindest an seiner Außenseite elektrisch leitend ausgebildet ist. Die Struktur des Gewebes bildet hierbei die Oberflächenstruktur des Wellenerdungselementes.

Das Gewebeschlauchstück besteht aus miteinander verwobenen Fasern, die aus elektrisch leitendem Material bestehen. Das Gewebeschlauchstück lässt sich einfach von einem Gewebeschlauch in der erforderlichen Länge abtrennen.

Das Gewebeschlauchstück kann auch mit einer leitenden Beschichtung versehen sein oder aus elektrisch leitendem Vollmaterial oder aus beidem bestehen.

Das Gewebeschlauchstück kann so eingebaut werden, dass es mit einem zylindrischen Abschnitt auf der Welle aufliegt.

Die Verbindung zum zweiten Maschinenelement wird in vorteilhafter Weise dadurch erreicht, dass das Gewebeschlauchstück an seinem vom zylindrischen Abschnitt abgewandten Ende etwa radial aufgeweitet ist. Bei einer solchen Ausbildung erfolgt die Ableitung der elektrischen Ladungen, Spannungen und Ströme von der Welle auf das Gewebeschlauchstück radial.

Bei einer anderen vorteilhaften Ausbildung ist das Gewebeschlauchstück so vorgesehen, dass sein etwa radial aufgeweitetes Ende an der Stirnseite der Welle anliegt. Dann erfolgt die Ableitung von der Welle auf das Gewebeschlauchstück axial. Der an das aufgeweitete Ende anschließende Teil des Gewebeschlauchstückes wird dann mit dem zweiten Maschinenelement elektrisch leitend verbunden.

Bei einer anderen vorteilhaften Ausführungsform ist die Welle als Hohlwelle ausgebildet. In diesem Falle wird das Gewebeschlauchstück in einer Durchgangsöffnung der Hohlwelle angeordnet.

In diesem Falle sitzt das Gewebeschlauchstück auf dem zweiten Maschinenelement, das sich in die Hohlwelle erstreckt. Das Gewebeschlauchstück liegt an der Innenwand der Durchgangsöffnung der Hohlwelle elektrisch leitend an. Dann erfolgt die Ableitung von der Hohlwelle über das Gewebeschlauchstück an das die Hohlwelle durchsetzende zweite Maschinenelement.

Das Wellenerdungselement kann bei einer weiteren vorteilhaften Ausbildung so vorgesehen sein, dass es tangential an der Welle anliegt. Vorteilhaft ist hierbei, wenn an der Welle nicht nur ein, sondern mehrere Wellenerdungselemente jeweils tangential und mit Abstand voneinander anliegen. Das Wellenerdungselement selbst kann ein strangförmiges Bauteil (hohl oder massiv), ein schwammartiger Ring oder auch ein Gewebeschlauchstück sein.

Bei einer anderen vorteilhaften Ausbildung kann das Wellenerdungselement so vorgesehen sein, dass es sich nicht über den gesamten Umfang der Welle erstreckt, sondern nur über einen Teilbereich des Umfanges. Vorteilhaft umschlingt in diesem Falle das Wellenerdungselement die Welle über etwa 180°. Infolge der Elastizität des Wellenerdungselementes ist ein sicherer Kontakt zwischen ihm und der Welle gegeben.

Die an den gekrümmten, an der Welle anliegenden Abschnitt anschließenden Teile des Wellenerdungselementes können in geeigneter Weise am zweiten Maschinenelement befestigt werden. Das Wellenerdungselement wiederum kann als strangförmiges Bauteil (hohl oder massiv), als schwammartiger Ring oder als Gewebeschlauchstück ausgebildet sein.

Vorteilhaft ist es, wenn das Wellenerdungselement mäanderförmig in einem Halter derart eingelegt ist, dass radial nach innen vorstehende Abschnitte an der Welle anliegen.

Das Wellenerdungselement kann auch fest auf dem ersten Maschinenelement sitzen. In diesem Fall stehen die Abschnitte radial nach außen vor und liegen am zweiten Maschinenelement an.

In vorteilhafter Ausbildung kann das Wellenerdungselement auch ein Federblech oder ein Ableitband sein, die ebenfalls von einem Bauteil in der erforderlichen Länge abgetrennt und eingebaut werden.

Bei einer weiteren vorteilhaften Ausbildung wird das Wellenerdungselement durch eine elektrisch leitende Hülse gebildet, die fest auf der Welle sitzt und die in axialem oder radialem Kontakt mit dem zweiten Maschinenelement steht.

Die Hülse kann aus festem oder elastischem Material bestehen, das fest auf der Welle befestigt ist und diese umgibt.

Für den axialen Kontakt ist die Hülse in vorteilhafter Weise mit wenigstens einem radial abstehenden Teil, insbesondere einem Radialflansch, versehen. Er greift in eine Ringnut des zweiten Maschinenelementes derart ein, dass der radial abstehende Teil an zumindest einer Seitenwand der Ringnut anliegt. Dadurch erfolgt die Ableitung der elektrischen Ladungen, Spannungen oder Ströme von der Welle über die Hülse und den radial abstehenden Teil auf das zweite Maschinenelement, wobei der Ableitkontakt über die aneinander liegenden Seitenwände des radial abstehenden Teils und der Ringnut hergestellt ist.

Ein radialer Kontakt zwischen der Hülse und dem zweiten Maschinenelement wird in vorteilhafter Weise dadurch erreicht, dass das zweite Maschinenelement die Hülse umgibt und an ihrer Außenseite anliegt.

Bei einer weiteren vorteilhaften Ausführung wird das Wellenerdungselement durch eine ringförmige Gewebescheibe gebildet, die aus elektrisch leitfähigem Material besteht. Sie ist in der Einbaulage derart elastisch verformt, dass ihr radial innerer Bereich unter Radialkraft auf der Welle aufliegt. Der radial äußere Bereich der Gewebescheibe ist mit dem zweiten Maschinenelement verbunden. Die Gewebescheibe wird aus einem Endlosmaterial hergestellt und kann, bis auf ihren Kontaktbereich mit der Welle, auf ihren beiden einander gegenüber liegenden Außenseiten mit einer elektrisch isolierenden Beschichtung versehen sein.

Bei einer anderen vorteilhaften Ausführungsform wird die Gewebescheibe von einer elektrisch leitenden Schicht umgeben.

Anstelle des elektrisch leitenden Gewebes kann auch ein elektrisch leitendes Organoblech eingesetzt werden.

Das erfindungsgemäße Verfahren zeichnet sich dadurch aus, dass für das Wellenerdungselement vom Ausgangsmaterial ein Stück entsprechender Länge abgelängt wird. Dadurch kann die Wellenerdungseinrichtung in jeder gewünschten Größe sehr einfach gefertigt werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in schematischer Darstellung und in Ansicht eine erfindungsgemäße Wellenerdungseinrichtung, die an einer Stirnseite einer Welle anliegt,
- Fig. 2: einen Schnitt längs der Linie A-A in Fig 1,
- Fig. 3bis Fig. 20: in Darstellungen entsprechend den Fig. 1 und 2 weitere Ausführungsformen von erfindungsgemäßen Wellenerdungseinrichtungen,
- Fig. 21: in Ansicht eine weitere Ausführungsform einer erfindungsgemäßen Wellenerdungseinrichtung,
- Fig. 22: einen Schnitt längs der Linie A-A in Fig. 21,
- Fig. 23: einen Schnitt längs der Linie B-B in Fig. 22,
- Fig. 24: in Ansicht eine weitere Ausführungsform einer erfindungsgemäßen Wellenerdungseinrichtung,
- Fig. 25: einen Schnitt längs der Linie A-A in vergrößerter Darstellung,
- Fig. 26: in vergrößerter Darstellung den Ausschnitt C in Fig. 25,
- Fig. 27 bis 29: in Darstellungen entsprechend den Fig. 24 bis 26 ein weiteres Ausführungsbeispiel einer erfindungsgemäßen Wellenerdungseinrichtung,
- Fig. 30: im Axialschnitt eine weitere Ausführungsform einer erfindungsgemäßen Wellenerdungseinrichtung,
- Fig. 31: im Axialschnitt eine weitere Ausführungsform einer erfindungsgemäßen Wellenerdungseinrichtung,
- Fig. 32: in Ansicht ein weiteres Ausführungsbeispiel einer erfindungsgemäßen Wellenerdungseinrichtung,
- Fig. 33: einen Schnitt längs der Linie A-A in Fig. 32,
- Fig. 34: einen Schnitt längs der Linie B-B in Fig 32,
- Fig. 35: den Ausschnitt Z in Fig. 33 in vergrößerter Darstellung,
- Fig. 36: den Ausschnitt Y in Fig. 34 in vergrößerter Darstellung,
- Fig. 37: in Ansicht eine weitere Ausführungsform einer erfindungsgemäßen Wellenerdungseinrichtung in Ansicht,
- Fig. 38: einen Schnitt längs der Linie C-C in Fig. 37,
- Fig. 39: einen Schnitt längs der Linie D-D in Fig. 37,
- Fig. 40: den Ausschnitt W in Fig. 38 in vergrößerter Darstellung,
- Fig. 41: den Ausschnitt X in Fig. 39 in vergrößerter Darstellung,
- Fig. 42: ein ringscheibenförmiges Wellenerdungselement in Ansicht,
- Fig. 43a, Fig. 43b bis 45: Beispiele für Oberflächenstrukturen des Wellenerdungselementes,
- Fig. 46 bis 49: Beispiele für Perforierungen des Wellenerdungselementes,
- Fig. 50 bis 52: Beispiele für Porenausbildungen des Wellenerdungs-elementes.

Die im Folgenden beschriebenen Wellenerdungseinrichtungen leiten induzierte Spannungen oder Ströme und elektrische Ladungen von einem ersten Maschinenelement, das vorzugsweise eine Welle ist, in ein zweites Maschinenelement ab, das aus elektrisch leitendem Material besteht. Die Wellenerdungseinrichtungen werden insbesondere bei Motoren, aber beispielsweise auch bei Getrieben, eingesetzt. Allgemein werden die Wellenerdungseinrichtungen dort herangezogen, wo induzierte Spannungen, Ströme oder elektrische Ladungen von Wellen abgeleitet werden soll.

Die Wellenerdungselemente aller Ausführungsformen sind so ausgebildet, dass sie von einem Ausgangsmaterial abgetrennt werden und, je nach Bauform, in ihrer Längsrichtung von Kanälen durchzogen oder zumindest an ihrer Berührfläche mit dem ersten Maschinenelement mit einer Perforierung und/oder einer Oberflächenstruktur und/oder einer Oberflächentextur versehen sind. Diese Oberflächengestaltung kann bereits am Ausgangsmaterial vorgesehen sein oder nach dem Abtrennen des Wellenerdungselementes vom Ausgangsmaterial an der Oberseite des Wellenerdungselementes erzeugt werden.

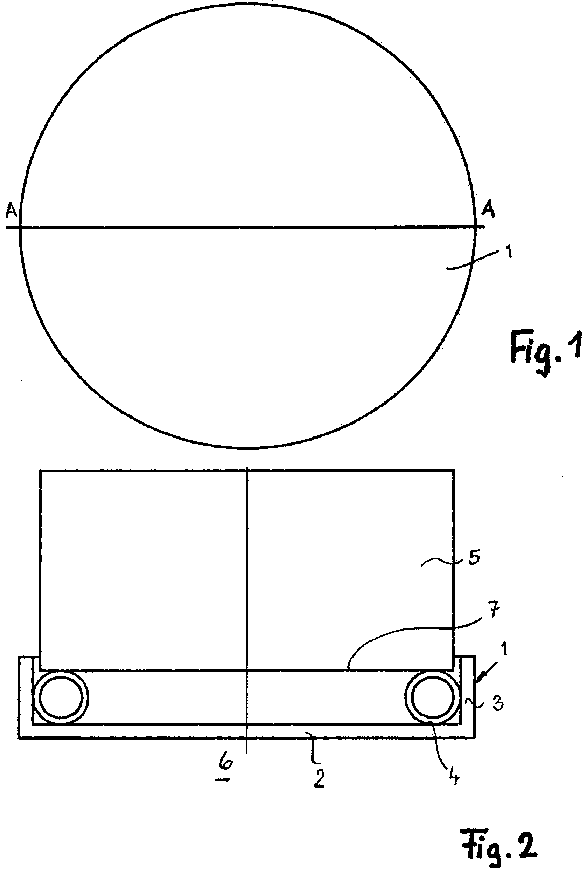

Bei der Ausführungsform gemäß den Fig. 1 und 2 hat die Wellenerdungseinrichtung einen Halter 1, der gehäuseförmig ausgebildet ist und Zylinderform hat.

Der Halter 1 weist einen vorteilhaft ebenen Boden 2 auf, von dessen Rand eine zylindrische Ringwand 3 senkrecht absteht. Sie hat über ihren Umfang konstante Höhe und ist vorteilhaft einstückig mit dem Boden 2 ausgebildet.

Der Halter 1 nimmt ein Wellenerdungselement in Form eines Wellenerdungsringes 4 auf, der kreisförmigen Querschnitt hat und auf dem Boden 4 aufliegt und an der Ringwand 3 anliegt.

Der Wellenerdungsring 4 ist im Ausführungsbeispiel als Hohlkörper ausgebildet.

Der Wellenerdungsring 4 wird von einem Strang abgelängt, der beispielsweise als Endlosware auf Rollen ausgeliefert wird. Von diesem Strang können die Wellenerdungsringe 4 in der erforderlichen Länge einfach abgetrennt und in den Halter 1 eingelegt werden.

Der Strang ermöglicht eine einfache Bevorratung, zum Beispiel auf einer Rolle. Als Werkstoff für diesen Strang kommen alle elektrisch leitenden Materialien in Betracht, zum Beispiel PTFE, leitender Gummi, Metalle und dgl. Auch ein mehrkomponentiger Aufbau des Stranges ist möglich. Bei einem solchen mehrkomponentigen Aufbau weist der Strang eine leitende Hülle in Form von einem Gewebe, Fasern, Partikeln, Compounds und dgl. auf, die eine elastische Seele umgibt, die beispielsweise aus Gummi, einer metallischen Feder, einer Flüssigkeit, einem Gel und dgl. bestehen kann. Diese elastische Seele kann zwei oder auch mehr Schichten haben.

Auch besteht die Möglichkeit, die Seele mit einem radialen Aufbau auszubilden, beispielsweise nach Art einer Zwiebel.

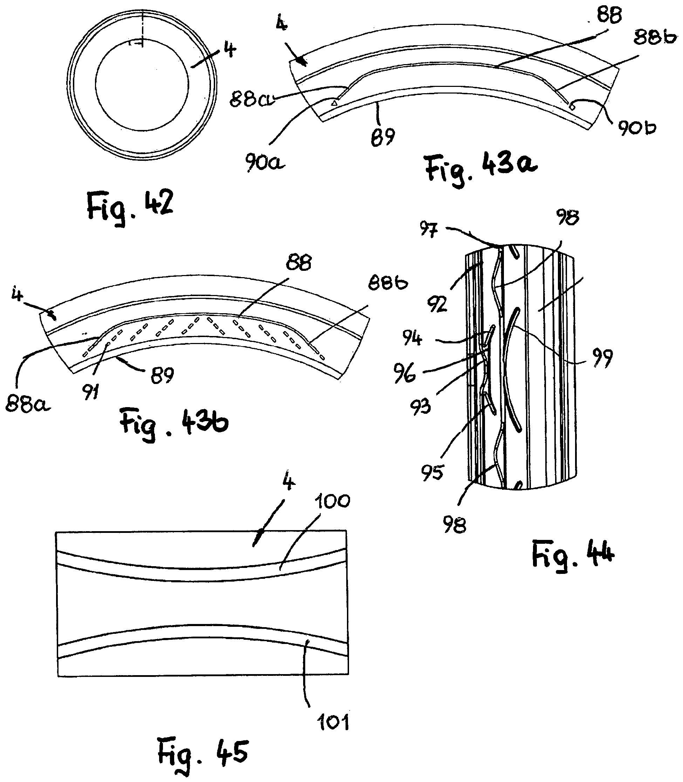

Der Wellenerdungsring 4 ist als Hohlkörper ausgebildet und kann aus elektrisch leitfähigem Material bestehen. Zusätzlich kann der Wellenerdungsring 4 auf seiner Außenseite mit einer elektrisch leitenden Schicht versehen sein. Sie kann an ihrer Berührfläche mit der Welle 5 mit einer an den Einsatzfall angepassten Oberflächenstruktur und/oder -textur versehen sein. Beispiele für Oberflächengestaltungen werden anhand der Fig. 42 bis 52 erläutert.

Der Wellenerdungsring 4 kann auch aus nicht elektrisch leitfähigem Material bestehen. In diesem Fall ist der Wellenerdungsring 4 von der elektrisch leitfähigen Schicht umgeben.

Wenn sich im Wellenerdungsring 4 ein Medium befindet, kann dieses aus leitfähigem oder nicht leitfähigem Material bestehen. Besteht das im Wellenerdungsring 4 befindliche Medium aus elektrisch leitfähigem Material, dann wird dadurch der Übergangswiderstand zwischen dem Wellenerdungsring 4 und dem in ihm befindlichen Medium verringert, wodurch die Ableitung der induzierten Spannungen, Ströme oder elektrischen Ladungen von der Welle 5 verbessert wird.

Die beschriebenen möglichen Gestaltungen des Wellenerdungsringes 4 führen zu einem elektrisch leitenden Bauteil, das eine hervorragende Ableitung ermöglicht.

Der Wellenerdungsring 4 muss nicht als Hohlkörper ausgebildet sein. Er kann auch aus Vollmaterial bestehen, wenn es die Elastizität des Materials des Wellenerdungsringes 4 ermöglicht. Der Wellenerdungsring kann in diesem Fall vollständig aus einem elektrisch leitenden Material bestehen, aber auch aus einem elektrisch nichtleitenden Material hergestellt sein, das mit einer elektrisch leitenden Beschichtung versehen ist. Im Vollmaterial können die Perforierung, die Oberflächenstruktur oder die Oberflächentextur in gewünschtem Maße vorgesehen werden, falls gewünscht oder falls es notwendig ist. Auch lassen sich Poren an der Berührfläche einfach vorsehen.

Der Wellenerdungsring 4 ist elastisch ausgebildet und kann dadurch leicht in den Halter 1 eingelegt werden. Aufgrund der Elastizität legt sich der Wellenerdungsring 4 unter Radialkraft an die Innenwand der Ringwand 3 an.

Der Halter 1 mit dem Wellenerdungsring 4 bilden zusammen die Wellenerdungseinrichtung 6, die so eingebaut ist, dass der Wellenerdungsring 4 mit der Stirnseite 7 der Welle 5 in Kontakt kommt. Der Außendurchmesser der Welle 5 im Bereich ihrer Stirnseite 7 ist kleiner als der Innendurchmesser der Ringwand 3, so dass nicht die Gefahr besteht, dass die Ringwand 3 des Halters 1 mit dem Mantel der Welle 5 in Kontakt kommt.

Die Welle 5 greift derart in den Halter 1 ein, dass sie unter Axialkraft am Wellenerdungsring 4 anliegt. Dadurch kann das Spannungspotential der rotierenden Welle 5 auf den Wellenerdungsring 4 und von dort auf den Halter 1 übertragen werden. Der Halter 1 ist in geeigneter Weise mit einem (nicht dargestellten) geerdeten Gehäuse versehen, in das der Halter eingebaut ist.

Der Querschnittsdurchmesser des Wellenerdungsringes 4 kann in einfacher Weise so gewählt werden, dass der Wellenerdungsring 4 unter ausreichendem Druck an der Stirnseite 7 der Welle 5 anliegt.

Da der Wellenerdungsring 4 von einem Strang abgetrennt wird, können unterschiedlich große Halter 1 in einfacher Weise mit dem erforderlichen Wellenerdungsring 4 versehen werden. Er muss lediglich in den Halter 1 so eingelegt werden, dass er, wie Fig. 2 zeigt, am Boden 2 sowie an der Ringwand 3 des Halters 1 anliegt.

Die Einbauverhältnisse sind so vorgesehen, dass die Welle 5 geringfügig in den Halter 1 eintaucht, so dass ein sicherer Kontakt zwischen der Welle 5 und dem Wellenerdungsring 4 gegeben ist. Er wird durch die Welle 5 im Halter 1 axial gesichert.

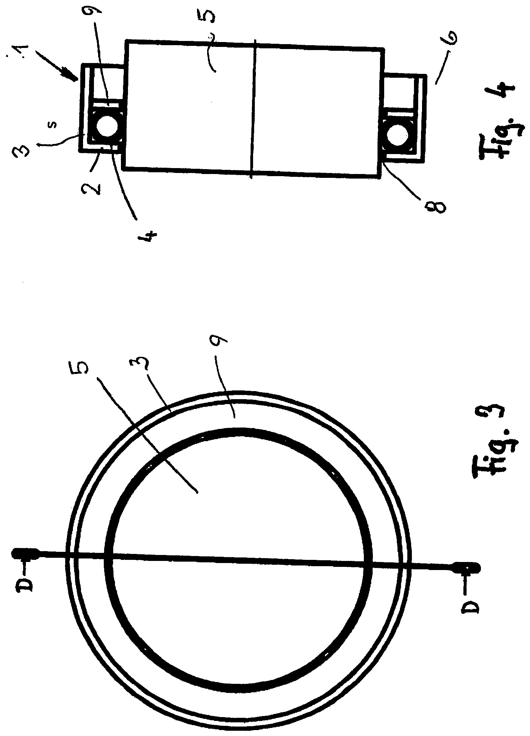

Während bei der beschriebenen Ausführungsform eine axiale Kontaktführung zwischen der Welle 5 und dem Wellenerdungsring 4 vorgesehen ist, erfolgt bei der Ausführungsform gemäß den Fig. 3 und 4 die Kontaktierung radial.

Der Halter 1 hat den Boden 2 und die zylindrische Ringwand 3. Im Unterschied zur vorigen Ausführungsform ist der Boden 2 mit einer zentralen Durchtrittsöffnung 8 für die Welle 5 versehen. Der Wellenerdungsring 4 umgibt die Welle 5 und liegt unter radialer Kraft am Umfang der Welle 5 an.

Der Wellenerdungsring 4 ist in gleicher Weise wie beim vorigen Ausführungsbeispiel in den Halter 1 eingelegt. Zur Axialsicherung des Wellenerdungsringes 4 im Halter 1 dient als Sicherungselement 9 eine flache Ringscheibe, welche in einer Radialebene der Wellenerdungseinrichtung 6 angeordnet ist und die Welle 5 mit Abstand umgibt.

Die Ringscheibe 9 liegt in einer Radialebene der Wellenerdungseinrichtung 6 und ist mit ihrem äußeren Rand in geeigneter Weise an der Innenseite der Ringwand 3 befestigt, beispielsweise angeklebt, angeschweißt und dgl.. Vorteilhaft kann das Sicherungselement 9 so vorgesehen sein, dass es den Wellenerdungsring 4 geringfügig elastisch zusammendrückt.

Der Außendurchmesser des Wellenerdungsringes 4 kann so gewählt sein, dass er unter elastischer Verformung an der Außenseite der Welle 5 anliegt. Dementsprechend steht der Wellenerdungsring 4 radial über den inneren Rand des Sicherungselementes 9 sowie den Rand der Durchtrittsöffnung 8 vor, wenn die Welle 5 noch nicht montiert ist.

Der Wellenerdungsring 4 kann eine Ausbildung haben, wie sie anhand der Fig. 1 und 2 beschrieben worden ist. Der gehäuseartige Halter 1 ist - bis auf die Durchtrittsöffnung 8 - gleich ausgebildet wie der Halter 1 gemäß den Fig. 1 und 2.

Das Sicherungselement 9 kann beispielsweise etwa in halber axialer Höhe an der Ringwand 3 befestigt sein. Das Sicherungselement 9 dient gleichzeitig auch als Schutz für den Wellenerdungsring 4.

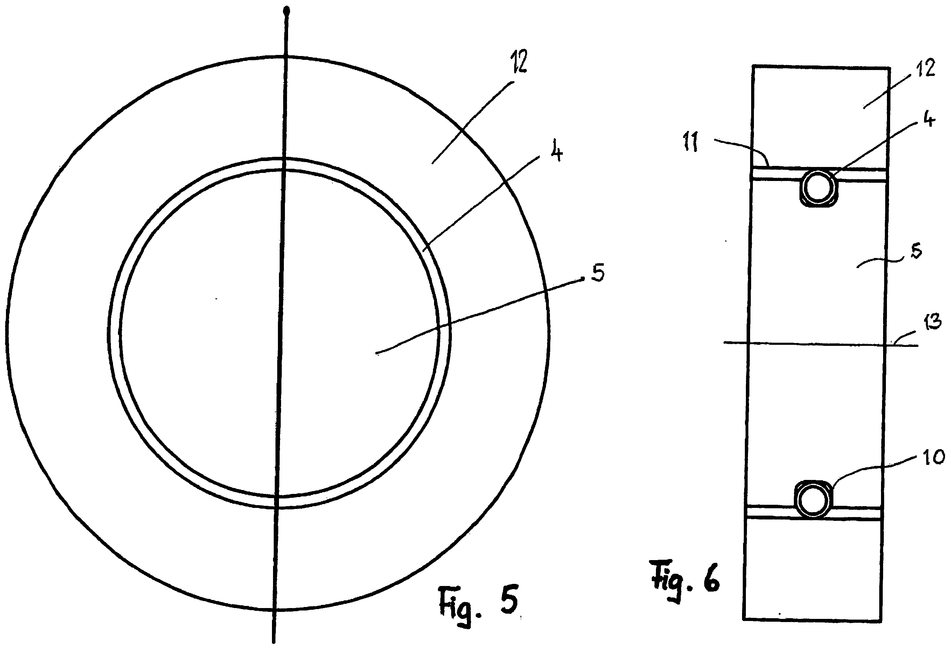

Bei der Ausführungsform gemäß den Fig. 5 und 6 ist die Welle 5 an ihrer äußeren Mantelfläche mit einer Ringnut 10 versehen, in die der Wellenerdungsring 4 eingelegt ist. Die Ringnut 10 und der Wellenerdungsring 4 sind so aufeinander abgestimmt, dass der Wellenerdungsring 4 radial aus der Ringnut 10 ragt und an einer Innenwand 11 eines Gehäuses 12 unter elastischer Verformung anliegt. Das Gehäuse 12 umgibt die Welle 5 mit radialem Abstand.

Der Wellenerdungsring 4 kann eine Ausbildung haben, wie sie anhand der Fig. 1 und 2 beschrieben worden ist.

Bei dieser Ausführungsform dreht das Gehäuse 12 um die Achse 13, während die Welle 5 stillsteht. Es besteht aber auch die Möglichkeit, dass sich die Welle 5 dreht und das Gehäuse 12 stillsteht.

Hinsichtlich der axialen Abmessungen sind die Fig. 5 und 6 lediglich schematische Darstellungen. Das Gehäuse 12 und die Welle 5 können unterschiedliche axiale Breite haben.

In der Einbaulage ist der Wellenerdungsring 4 unter elastischer Verformung mit der Innenwand 11 des Gehäuses 12 in Kontakt, so dass eine sichere Ableitung der induzierten Spannungen, Ströme oder elektrische Ladungen sichergestellt ist.

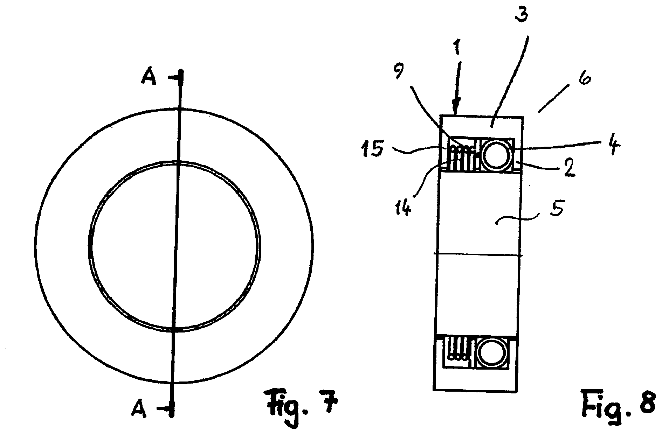

Die Fig. 7 und 8 zeigen eine Wellenerdungseinrichtung 6, die ähnlich ausgebildet ist wie die Ausführungsform gemäß den Fig. 3 und 4. Das Sicherungselement 9 in Form der flachen Ringscheibe liegt lose im Halter 1 und wird durch wenigstens eine Druckfeder 14 gegen den Wellenerdungsring 4 gedrückt. Die Druckfeder 14 stützt sich mit einem Ende an einem radial nach innen gerichteten Ringflansch 15 ab, der parallel zum Boden 2 verläuft und vorteilhaft einstückig mit der Ringwand 3 des Halters 1 ausgebildet ist.

Die Kraft der Druckfeder 14 ist so eingestellt, dass der Wellenerdungsring 4 nicht vollständig zusammengedrückt wird, sondern nur so weit axial elastisch verformt wird, dass eine sichere Kontaktierung mit der Welle 5 und der Ringwand 3 des Halters 1 sichergestellt ist.

Da das Sicherungselement 9 durch die Druckfeder 14 gegen den Wellenerdungsring 4 gedrückt wird, muss das Sicherungselement 9 nicht gesondert im Halter 1 befestigt werden.

Der Wellenerdungsring 4 hat einen solchen Außendurchmesser, dass er unter radialer elastischer Verformung sowohl an der Ringwand 3 als auch an der Welle 5 anliegt, wodurch eine sichere und zuverlässige Ableitung der induzierten Spannungen, Ströme und elektrischen Ladungen gewährleistet ist.

Der Wellenerdungsring 4 steht radial nach innen über den Ringflansch 15, das Sicherungselement 9 und den Boden 2 über, so dass ein sicherer Kontakt mit der Welle 5 gewährleistet ist. Der Ringflansch 15, das Sicherungselement 9 und der Boden 2 umgeben die Welle 5 mit ausreichendem Abstand.

Der Wellenerdungsring 4 kann eine Ausbildung haben, wie sie im Zusammenhang mit den Fig. 1 und 2 beschrieben ist.

Um den Einbau des Sicherungselementes 9 und der Druckfeder 14 in den Halter 1 in einfacher Weise zu ermöglichen, kann der Halter 1 so ausgebildet sein, dass der Ringflansch 15 nach dem Einlegen des Sicherungselementes 9 und der Druckfeder 14 radial nach innen gebogen wird.

Eine weitere Möglichkeit besteht darin, das Sicherungselement 9 beispielsweise aus zwei oder mehr Teilringen zu bilden, die sich einfach in den Halter 1 einsetzen lassen, wenn der Ringflansch 15 schon vorhanden ist. Anstelle der die Welle 5 umgebenden Druckfeder 14 können auch einzelne Druckfedern verwendet werden, die über den Umfang der Welle 5 verteilt im Halter 1 angeordnet sind. Solche einzelnen Druckfedern können auch dann eingebaut werden, wenn der Halter 1 bereits mit dem Ringflansch 15 versehen ist. Die Druckfeder 14 ermöglicht eine axiale Nachstellung des Sicherungselementes 9 und dementsprechend auch durch die elastische Verformung eine Nachstellung des Wellenerdungsringes 4.

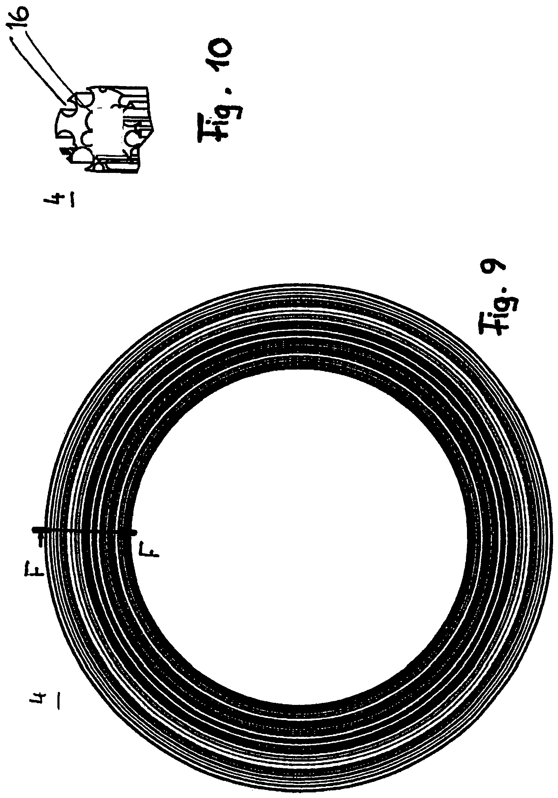

Die Fig. 9 und 10 zeigen als Wellenerdungselement einen Wellenerdungsring 4, der von einem Strang, vorzugsweise einem Endlosstrang, entsprechend den vorigen Ausführungsbeispielen abgetrennt werden kann. Wie Fig. 10 zeigt, hat der Wellenerdungsring 4 eine porige Struktur. Sie besteht darin, dass der Wellenerdungsring 4 über seine Länge verlaufende offene oder geschlossene Kanäle 16 aufweist. Sie sind so vorgesehen, dass der Wellenerdungsring 4 noch eine ausreichende Stabilität hat.

Der Wellenerdungsring 4 ist aufgrund der beschriebenen Gestaltung schwammartig ausgebildet und elastisch verformbar. Er kann in der erforderlichen Länge vom Strang abgetrennt und in den Halter 1 oder auch in die Welle 5 eingelegt werden, wie anhand der vorigen Ausführungsbeispiele erläutert worden ist.

Der Strang kann mit den Kanälen 16 sehr einfach durch Extrudieren hergestellt werden.

Darüber hinaus besteht die Möglichkeit, an der Außenseite des Wellenerdungsringes 4 zusätzlich Poren und/oder Oberflächenstrukturen und/oder Oberflächentexturen vorzusehen.

Der Querschnitt der Kanäle 16 kann beliebig sein.

Anstelle der Kanäle 16 kann der Wellenerdungsring 4 auch über seine Länge verteilt angeordnete Poren bzw. Oberflächenstrukturen bzw. -texturen aufweisen. Auch deren Form kann variieren.

Der Strang kann aus einem geeigneten Kunststoff hergestellt sein, der entweder selbst elektrisch leitend ist oder der mit einer elektrisch leitenden Beschichtung versehen sein kann.

Der Wellenerdungsring 4 ist ausreichend elastisch verformbar, so dass er einerseits einfach in den Halter 1 bzw. in die Ringnut 10 der Welle 5 eingelegt und andererseits in der Einbaulage so elastisch in seiner Dicke verformt werden kann, dass er unter ausreichendem Druck an der Welle bzw. an dem elektrisch leitenden Halter 1 bzw. Gehäuse 12 anliegt.

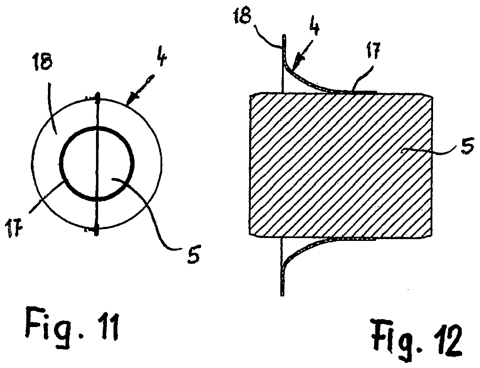

Bei der Ausführungsform nach den Fig. 11 und 12 ist das Wellenerdungselement 4 ein Schlauchstück. Das Schlauchstück 4 wird von einem Endlosschlauch in der erforderlichen Länge abgetrennt. Er ist vorteilhaft ein Gewebeschlauch, der aus elektrisch leitendem Material besteht und dessen Innendurchmesser kleiner ist als der Außendurchmesser der Welle 5.

Solche Gewebeschläuche sind bekannt. Sie bestehen aus miteinander verwobenen, elektrisch leitenden Drahtlitzen. Der Gewebeschlauch ist kostengünstig in verschiedenen Drahtstärken, Maschenweiten, Werkstoffvarianten und Durchmessern herstellbar. Dadurch können die Anpresskraft an die Welle 5, Durchmesserunterschiede, Widerstand und dgl. leicht verändert werden.

Da die Drahtlitzen miteinander verwoben sind, ergibt sich eine Oberflächenstruktur mit einer Vielzahl von Kontakten zwischen den Drahtlitzen, wodurch elektrische Ströme gut abgeleitet werden. Der Ausfall einer oder mehrere Drahtlitzen führt zu keinem Ausfall des Bauteiles.

Mit dem Gewebeschlauchstück können, wie auch mit den Wellenerdungsringen 4 der vorigen Ausführungsformen, Wellentoleranzen, Koaxialitäten und dgl. problemlos ausgeglichen werden.

Auch die Größe des elektrischen Widerstandes kann durch Wahl des Materials der Drahtlitzen, durch die Drahtdicke, durch die Maschenweite und dgl. an den Einsatzfall angepasst werden.

Der Schlauch bzw. das Schlauchstück 4 sind so aufweitbar, dass das Wellenerdungselement flächig und mit Radialkraft auf dem Mantel der Welle 5 aufliegt.

Vorteilhaft ist das Schlauchstück 4 axial so lang, dass es mit einem zylindrischen Abschnitt 17 auf der Welle 5 aufliegt (Fig. 12). Der zylindrische Abschnitt 17 hat eine solche axiale Länge, dass eine sichere Ableitung der induzierten Spannungen, Ströme und elektrischen Ladungen von der Welle 5 gewährleistet ist.

Vom zylindrischen Abschnitt 17 aus erweitert sich das Schlauchstück 4 stetig. An seinem vom zylindrischen Abschnitt 17 abgewandten Endbereich ist es zu einem radial nach außen gerichteten Ringflansch 18 aufgeweitet, mit dem das Schlauchstück 4 an einem (nicht dargestellten) Gehäuse anliegend befestigt ist, an das die Spannungen, Ströme bzw. elektrische Ladungen abgegeben werden. Mit dem in einer Radialebene liegenden Ringflansch 18 liegt das Schlauchstück 4 flächig an einer entsprechenden Gehäusewand an, was eine zuverlässige Ableitung sicherstellt.

Das das Wellenerdungselement bildende Gewebeschlauchstück 4 lässt sich einfach in die gewünschte Form bringen.

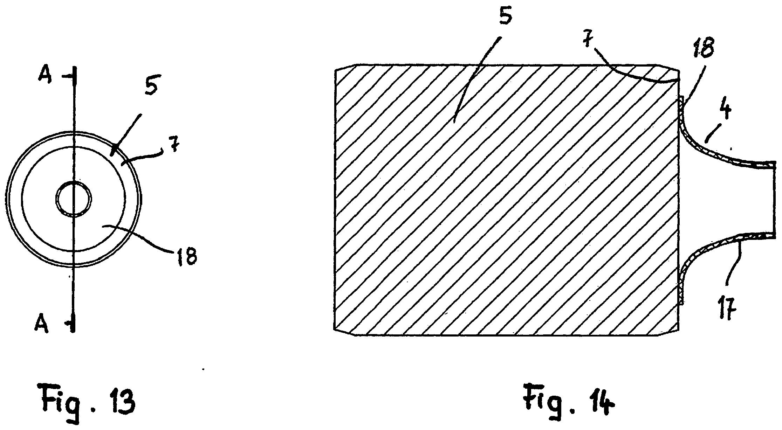

Bei der Ausführungsform gemäß den Fig. 13 und 14 liegt das durch ein Gewebeschlauchstück gebildete Wellenerdungselement 4 ähnlich der Ausführungsform nach den Fig. 1 und 2 an der Stirnseite 7 der Welle 5 an. Das Wellenerdungselement 4 liegt mit dem Radialflansch 18 flächig an der Stirnseite 7 der Welle 5 an. Der Ringflansch 18 liegt vorteilhaft unter elastischer Verformung mit Axialkraft an der Stirnseite 7 der Welle 5 an, so dass eine zuverlässige Ableitung gewährleistet ist.

Das Wellenerdungselement 4 verjüngt sich vom Ringflansch 18 aus stetig. Der zylindrische Abschnitt 17 ist im Unterschied zur vorigen Ausführungsform nicht auf der Welle 5 vorgesehen, sondern ist mit einem (nicht dargestellten) Gehäuse aus elektrisch leitendem Material verbunden. Diese Verbindung kann beispielhaft dadurch erfolgen, dass der zylindrische Abschnitt 17 an einer Wand einer Öffnung des Gehäuses oder auf einem Gehäuseteil befestigt ist.

Wenn der Ringflansch 18 unter elastischer Verformung an der Welle 5 anliegt, ergibt sich in Achsrichtung ein Nachstellweg, so dass der nötige Anpressdruck des Ringflansches 18 an der Welle 5 über eine lange Einsatzdauer sichergestellt ist.

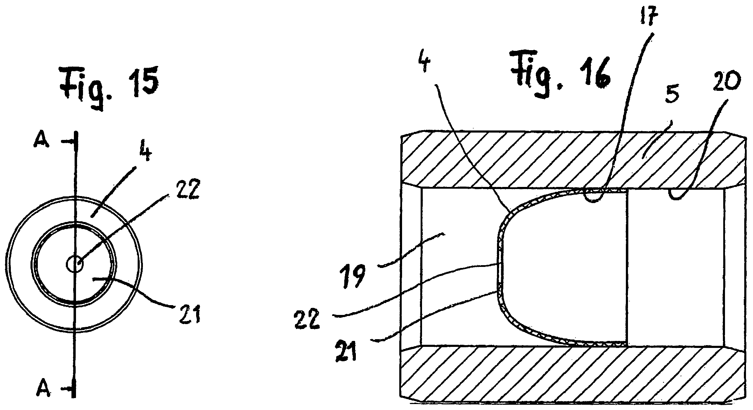

Die Fig. 15 und 16 zeigen die Möglichkeit, das Wellenerdungselement 4 innerhalb der Welle 5 unterzubringen. Das Wellenerdungselement 4 ist entsprechend den beiden zuvor beschriebenen Ausführungsformen durch ein Gewebeschlauchstück gebildet. Die Welle 5 ist als Hohlwelle ausgebildet und hat eine axiale Durchgangsöffnung 19, in der das Wellenerdungselement 4 untergebracht ist. Es ist in geeigneter Weise so aufgeweitet, dass es mit dem zylindrischen Abschnitt 17 unter radialer Kraft an der Innenwand 20 der Durchgangsöffnung 19 anliegt. Die Kontaktierung zwischen dem zylindrischen Abschnitt 17 und der Innenwand 20 ist so gestaltet, dass eine einwandfreie Ableitung der induzierten Spannungen, Ströme und elektrischen Ladungen von der Welle 5 sichergestellt ist.

Vom zylindrischen Abschnitt 17 aus, der das eine Ende des Wellenerdungselementes 4 bildet, verjüngt sich das Wellenerdungselement 4 radial nach innen bis zu einem radialen Boden 21, der mit einer zentralen Öffnung 22 versehen ist. Durch sie ragt ein (nicht dargestelltes) Bauteil, das elektrisch leitend ausgebildet ist und auf das die induzierten Ströme, Spannungen und elektrischen Ladungen von der Welle 5 über das Wellenerdungselement 4 abgeleitet werden können. Dieses Bauteil ragt aus der Welle 5 nach außen und ist in bekannter Weise mit einem (nicht dargestellten) geerdeten Bauteil elektrisch leitend verbunden oder selbst geerdet.

Vorteilhaft ist die Öffnung 22 so ausgebildet, dass sie beim Durchführen des Bauteiles elastisch aufgeweitet wird, so dass ihr Rand unter Vorspannung auf diesem Bauteil aufliegt.

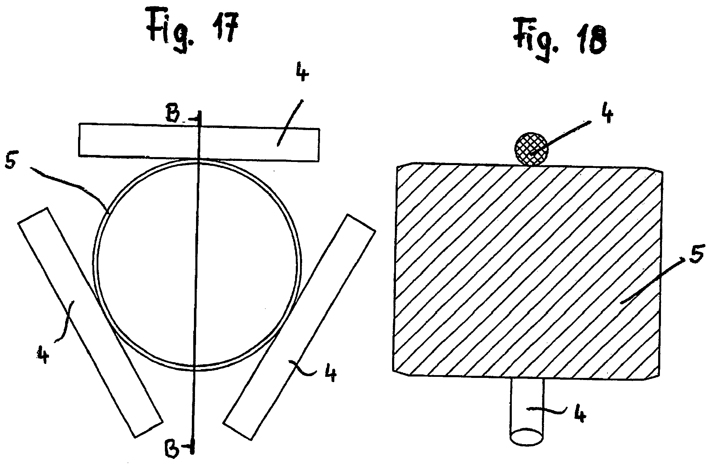

Die Fig. 17 und 18 zeigen eine Ausführungsform, bei der am Umfang der Welle 5 mehrere stabförmige Wellenerdungselemente 4 tangential anliegen. Im Ausführungsbeispiel sind drei Wellenerdungselemente 4 vorgesehen, die in gleichen Winkelabständen tangential am Umfang der Welle 5 anliegen. Vorteilhaft liegen die Wellenerdungselemente 4 unter Vorspannung an der Welle 5 an.

Die Wellenerdungselemente 4 werden wiederum durch Schlauchstücke gebildet, die beispielhaft gleich lang sind.

Die Wellenerdungselemente 4 sind entsprechend den Ausführungsformen gemäß den Fig. 11 bis 16 vorteilhaft Gewebeschlauchstücke.

Wie aus Fig. 18 hervorgeht, können die Wellenerdungselemente 4 auch durch Gewebebündel gebildet sein. In diesem Falle sind die Wellenerdungsringe 4 nicht als Hohlkörper, sondern massiv ausgebildet. Auch die Gewebebündel bestehen aus elektrisch leitendem Material. Grundsätzlich ist es auch möglich, dass die Gewebebündel nicht elektrisch leitend sind. In diesem Falle sind sie von einer elektrisch leitenden Beschichtung umgeben.

Je nach Durchmesser der Welle 5 können auch mehr als drei Wellenerdungselemente 4 vorgesehen sein.

Im einfachsten Fall ist nur ein einziges Wellenerdungselement 4 vorgesehen, das elektrisch leitend an der Welle 5 anliegt.

Die Wellenerdungselemente 4 sind in geeigneter Weise mit einem Halter (Fig. 1 bis 4, 7 und 8) oder mit einem geerdeten Gehäuse elektrisch leitend verbunden.

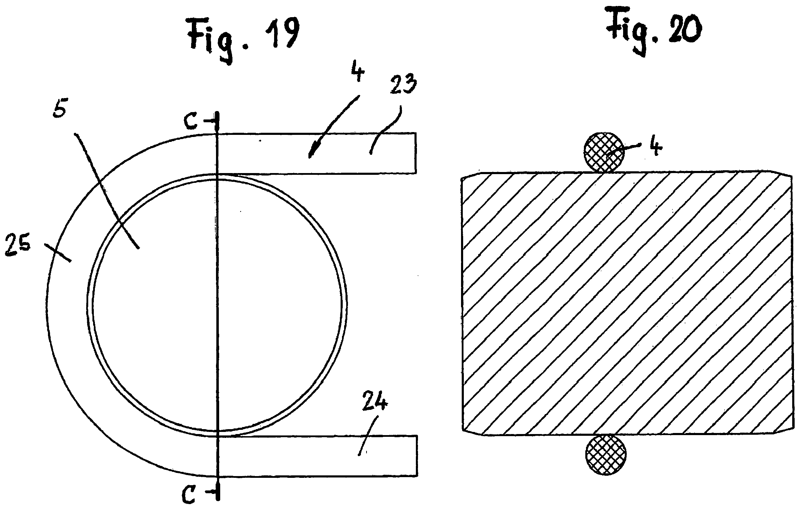

Die Fig. 19 und 20 zeigen die Möglichkeit, nur ein einziges Wellenerdungselement 4 zu verwenden. Es kann wiederum ein Schlauchstück, vorteilhaft ein Gewebeschlauch, sein oder als Gewebebündel ausgebildet sein. Die Außenseite des Schlauchstückes bzw. des Gewebebündels ist aufgrund des strukturellen Aufbaus mit der Oberflächenstruktur versehen.

Entsprechend den vorigen Ausführungsformen ist das Wellenerdungselement als Wellenerdungsring 4 ausgebildet, der von einem Strang in der erforderlichen Länge abgetrennt wird. Wie Fig. 19 zeigt, wird der Wellenerdungsring 4 um die Welle 5 geschlungen. Im Ausführungsbeispiel beträgt der Umschlingungswinkel etwa 180°. Dadurch liegen die beiden Enden 23, 24 parallel zueinander sowie tangential zur Welle 5. Der zwischen den Enden 23, 24 liegende Bogenteil 25 liegt am Umfang der Welle 5 an, vorzugsweise unter Vorspannung. Dadurch ist ein zuverlässiger Kontakt zwischen der Welle 5 und dem Wellenerdungsring 4 gegeben. Grundsätzlich ist jeder Umschlingungswinkel denkbar.

Mit den Enden 23, 24 ist der Wellenerdungsring 4 mit einem Halter bzw. einem Gehäuse in geeigneter Weise so verbunden, dass die Ableitung von der Welle 5 über den Wellenerdungsring 4 problemlos erfolgen kann.

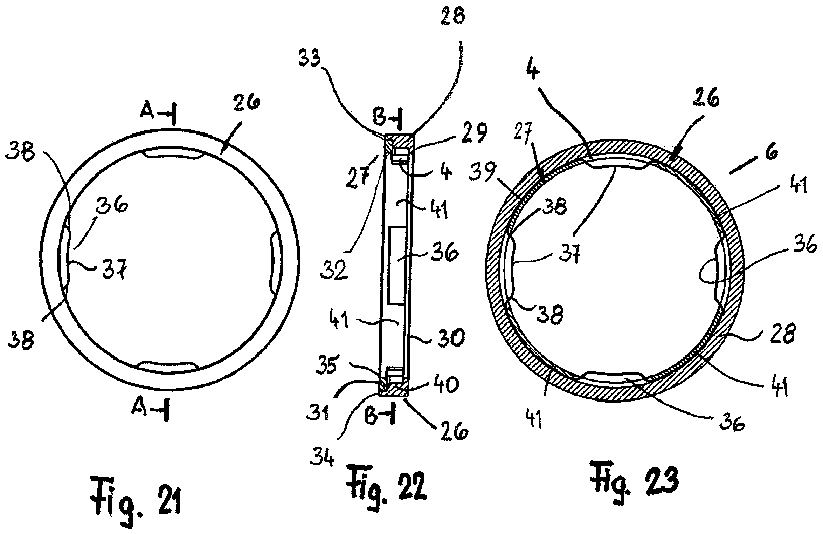

Bei der Ausführungsform nach den Fig. 21 bis 23 wird das Wellenerdungselement 4 durch ein Federblech gebildet, das in einen Halter 26 eingelegt und mit einem Sicherungsring 27 im Halter 26 gesichert ist. Grundsätzlich kann das Wellenerdungselement auch mit der Welle (nicht dargestellt) verbunden sein.

Der Halter 26, das Wellenerdungselement 4 und der Sicherungsring 27 bilden die Wellenerdungseinrichtung 6.

Der Halter 26 hat eine zylindrische Ringwand 28, die von einem Boden 29 absteht. Er ist mit einer Durchtrittsöffnung 30 für die (nicht dargestellte) Welle versehen.

Die Ringwand 28 weist an ihrem freien Rand eine radial nach innen und axial offene Vertiefung 31 auf, auf deren radialem Boden 32 der Sicherungsring 27 aufliegt.

Der Sicherungsring 27 ist vorteilhaft ein Klemmring, der unter Klemmung in der Vertiefung 31 gehalten ist. Der Sicherungsring 27 liegt mit seiner äußeren Mantelfläche an der Innenseite eines zylindrischen Ringabschnittes 33 an, der durch einen in der Wandstärke verringerten Teil der Ringwand 28 des Halters 26 gebildet wird.

Wie aus Fig. 22 hervorgeht, ist der Sicherungsring 27 so ausgebildet und in den Halter 26 eingesetzt, dass er nicht über den zylindrischen Ringabschnitt vorsteht. Vorteilhaft liegen die Stirnseite 34 des zylindrischen Ringabschnittes 33 und die vom Boden 32 der Vertiefung 31 abgewandte Außenseite 35 des Sicherungsringes 27 in einer gemeinsamen Radialebene des Halters 26.

Die radiale Breite des Sicherungsringes 27 ist größer als die radiale Breite des Bodens 32 der Vertiefung 31. Dadurch steht der Sicherungsring 27 radial nach innen über den Boden 32 vor.

Das Federblech als Wellenerdungselement 4 hat eine solche Breite, dass das Federblech am überstehenden Teil des Sicherungsringes 27 anliegt und dadurch axial zwischen dem Boden 29 des Halters 26 und dem Sicherungsring 27 gehalten ist. Um den Kontakt mit der durch den Halter 26 sich erstreckenden (nicht dargestellten) Welle zu ermöglichen, ist das Federblech so geformt, dass es über seinen Umfang mehrere radial nach innen vorstehende Kontaktabschnitte 36 aufweist, die an der Mantelfläche der Welle unter Federkraft anliegen. Im Ausführungsbeispiel ist das Federblech 4 mit vier gleichmäßig über den Umfang verteilt angeordneten Kontaktabschnitten 36 versehen. Sie sind vorteilhaft gleich ausgebildet, können aber auch unterschiedliche Formgebung haben.

Die Kontaktabschnitte 36 sind durch verformte Bereiche des Federbleches 4 gebildet. Sie haben jeweils einen konkav gekrümmten Anlageteil 37, der flächig am Umfang der Welle anliegt. Die Anlageteile 37 gehen über Schenkel 38 in Abstützteile 39 über, die an der Innenseite 40 der Ringwand 28 des Halters 26 anliegen (Fig. 23). Diese Abstützteile 39 können in Umfangsrichtung länger sein als die Kontaktabschnitte 36. Je nach Einsatzfall und/oder Einsatzort können die Kontaktabschnitte 36 und die Abstützteile 39 auch andere Längen in Umfangsrichtung haben.

Damit die Abstützteile 39 zuverlässig an der Innenseite 40 der Ringwand 28 anliegen, ist der Sicherungsring 27 mit Wandabschnitten 41 versehen, die in Umfangsrichtung gekrümmt und parallel zur Innenseite 40 der Ringwand 28 des Halters 26 verlaufen. Die Wandabschnitte 41 sind vorteilhaft einstückig mit dem Sicherungsring 27 ausgebildet und in der Einbaulage so angeordnet (Fig. 23), dass die Abstützteile 39 des Federbleches 27 zwischen der Ringwand 28 und den Wandabschnitten 41 liegen. Vorteilhaft sind die Wandabschnitte 41 so vorgesehen, dass sie die Abstützteile 39 des Federbleches 4 gegen die Innenseite 40 der Ringwand 28 drücken.

Die Wandabschnitte 41 liegen in Umfangsrichtung mit Abstand voneinander. Zwischen benachbarten Wandabschnitten 41 ragen die Kontaktabschnitte 36 des Federbleches 4 radial nach innen.

Die Schenkel 38 der Kontaktabschnitte 36 liegen jeweils stumpfwinklig zum Anlageteil 37 bzw. zum Abstützteil 39 und gehen gekrümmt in diese über.

Die Wandabschnitte 41 haben in Umfangsrichtung vorteilhaft konstante Länge und verhältnismäßig geringe Dicke. Dadurch wird erreicht, dass in der Einbaulage lediglich die Kontaktabschnitte 36 an der Welle anliegen. Die Wandabschnitte 41 haben ausreichenden Abstand von der Welle.

Die Schenkel 38 des Federbleches 4 gewährleisten eine ausreichende Elastizität der Kontaktabschnitte 36. Sie sind in vorteilhafter Weise so vorgesehen, dass sie in der Einbaulage des Wellenerdungselementes 6 mit entsprechendem radialen Druck unter elastischer Verformung an der Welle anliegen. Die Radialkraft sorgt dafür, dass die Kontaktabschnitte 36 nachgestellt werden können, so dass ein stets ausreichend fester Kontakt zwischen den Kontaktabschnitten 36 und der Welle gewährleistet ist.

Zumindest die Ringwand 28 mit dem Boden 29 des Halters 26 besteht aus elektrisch leitendem Material, wie anhand der Ausführungsform gemäß den Fig. 1 bis 4 erläutert worden ist. Die induzierten Spannungen, Ströme und Ladungen werden von der Welle über die Kontaktabschnitte 36 und den Halter 26 in ein (nicht dargestelltes) geerdetes Gehäuse geleitet.

Der Halter 26 ist sehr kompakt ausgebildet und hat nur geringe axiale Höhe, so dass er sich insbesondere zum Einbau in beengten Einbauräumen eignet. Zudem ist die Wellenerdungseinrichtung 6 einfach im Aufbau und kann kostengünstig hergestellt und montiert werden. In den Halter 26 wird zunächst das Federblech als Wellenerdungselement 4 eingelegt, wobei die Abstützteile 39 mit ihrem unteren Rand auf dem Boden 29 des Halters 26 abgestützt sind. Das Federblech selbst ist hochkant angeordnet, d.h. seine Kontaktabschnitte 36 und Abstützteile 39 erstrecken sich senkrecht zum Boden 29. Nach dem Einlegen des Federbleches wird der Sicherungsring 27 in den Halter 26 eingesetzt. Durch die Wandabschnitte 41 werden die Abstützteile 39 gegen die Innenseite 40 der Ringwand 28 des Halters 26 gedrückt. Außerdem wird der Sicherungsring in der beschriebenen Weise durch Klemmung im Halter 26 gehalten.

Die beschriebene Strukturierung wird durch eine Formgebung des Federbleches 4 erreicht. Die an der Welle anliegenden Abschnitte 37 der Kontaktabschnitte 36 können an ihrer Berührseite mit einer Prägung und dgl. als Oberflächentextur versehen sein.

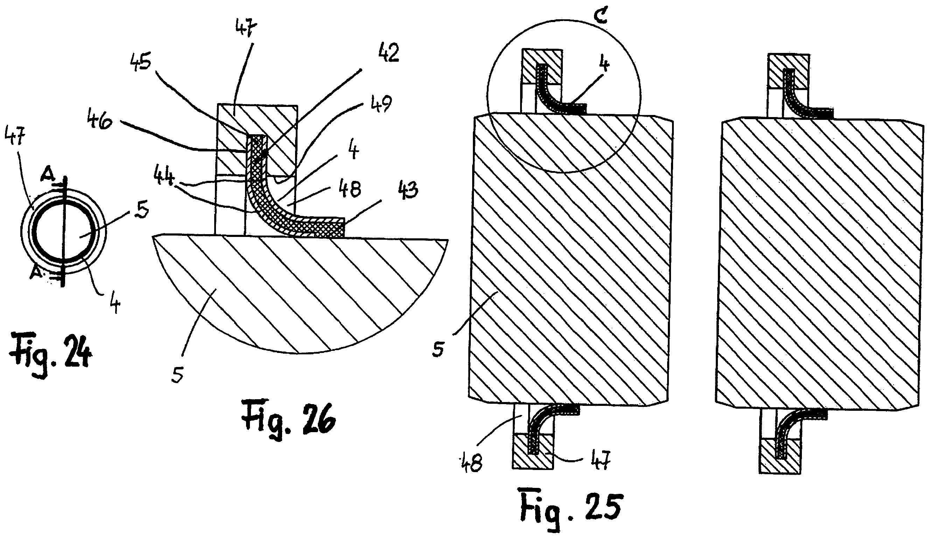

Bei der Ausführungsform nach den Fig. 24 bis 26 hat der Wellenerdungsring 4 als Wellenerdungselement ein leitfähiges Gewebe 42, das bis auf einen Kontaktbereich 43 auf beiden Außenseiten mit einer Beschichtung 44 versehen ist. Sie kann beispielsweise aus Gummi, Silikon und dgl. bestehen.

Die Gewebestruktur bildet die Oberflächenstruktur des Wellenerdungsringes 4 im Kontaktbereich.

Der Wellenerdungsring 4 ist ringscheibenförmig ausgebildet und mit seinem radial äußeren Bereich 45 in einer Ringnut 46 eines Gehäuses 47 befestigt. Es hat eine Durchtrittsöffnung 48 für die Welle 5. Die Ringnut 46 ist an einer die Durchtrittsöffnung 48 begrenzenden zylindrischen Wand 49 vorgesehen.

Der Wellenerdungsring 4 kann auf unterschiedliche Weise in der Ringnut 46 gehalten sein, beispielsweise geklebt oder eingeklemmt.

Das Gehäuse 47 ist elektrisch leitend ausgebildet und kann aus jedem geeigneten Material bestehen.

Der Wellenerdungsring 4 hat eine zentrale Durchtrittsöffnung, deren Durchmesser kleiner ist als der Außendurchmesser der Welle 5. Dadurch wird der radial innere Bereich des ringscheibenförmigen Wellenerdungsring 4 elastisch gebogen, wenn die Welle 5 durch die Durchtrittsöffnung des Wellenerdungsringes 4 geschoben oder die Wellenerdungseinrichtung 6 auf die Welle 5 geschoben wird. Durch die elastische Verformung des radial inneren Bereiches gelangt der Kontaktbereich 43 des Wellenerdungsringes 4 in Kontakt mit dem Mantel der Welle 5.

Zumindest das leitfähige Gewebe 42 wird von einem Endlosmaterial abgetrennt. Dieses Endlosmaterial kann bereits mit der Beschichtung 44 versehen sein. Grundsätzlich ist es aber auch möglich, die Beschichtung erst nachträglich am Wellenerdungsring 4 anzubringen.

Das Gewebe 42 ist am äußeren sowie am inneren Rand nicht mit der Beschichtung 44 versehen. Die induzierten Spannungen, Ströme sowie elektrische Ladungen können somit von der Welle 5 über den die Oberflächenstruktur aufweisenden Kontaktbereich 43 und den radial äußeren Rand in das Gehäuse 47 abgeleitet werden, das in bekannter Weise geerdet eingebaut ist.

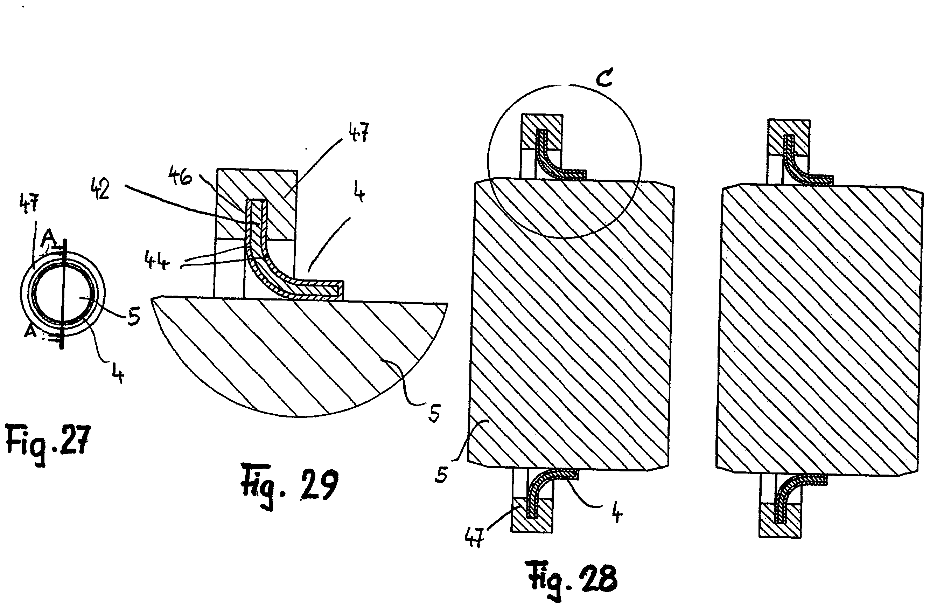

Der das Wellenerdungselement bildende Wellenerdungsring 4 gemäß den Fig. 27 bis 29 ist ähnlich ausgebildet wie das vorige Ausführungsbeispiel. Er ist als elastisch verformbare Ringscheibe ausgebildet, die in der Einbaulage in der beschriebenen Weise so elastisch verformt ist, dass es auf dem Außenmantel der Welle 5 unter entsprechendem Radialdruck aufliegt. Der Wellenerdungsring 4 ist in der beschriebenen Weise in der Ringnut 46 des Gehäuses 47 befestigt.

Die Beschichtung 44 ist im Unterschied zur vorigen Ausführungsform elektrisch leitend gestaltet. Sie umgibt das Gewebe 42 bis auf den radial äußeren Rand vollständig. Um die Reibung zwischen dem Wellenerdungsring 4 und der Welle 5 minimal zu halten, ist die Beschichtung 44 vorteilhaft als Gleitschicht ausgebildet. Sie kann aus jedem geeigneten leitfähigen Werkstoff bestehen und hat vorteilhaft eine Oberflächenstruktur.

Das Gewebe 42 muss in diesem Falle nicht elektrisch leitend ausgebildet sein. Anstelle des Gewebes 42 kann beispielsweise auch ein Organoblech verwendet werden.

Im Übrigen ist diese Ausführungsform gleich ausgebildet wie das Ausführungsbeispiel nach den Fig. 24 bis 26.

Die anhand der Fig. 24 bis 29 beschriebenen Ausführungsformen zeichnen sich dadurch aus, dass sie scheibenförmige Wellenerdungsringe 4 sind. Anstelle des Gewebes 42 kann beispielsweise auch PTFE eingesetzt werden, das mit einer elektrisch leitenden Beschichtung versehen oder selbst elektrisch leitend ausgebildet sein kann. Solche scheibenförmigen Wellenerdungsringe werden von einem Endlosmaterial in Form eines Rohrs abgetrennt und anschließend, falls gewünscht oder erforderlich, mit einer Oberflächenstruktur oder Oberflächentextur versehen, wie sie anhand der Fig. 42 bis 52 beispielhaft beschrieben ist.

Sofern eine solche Oberflächengestaltung nicht vorgesehen ist, können die scheibenförmigen Wellenerdungsringe 4 nach dem Abtrennen von dem entsprechenden Rohr direkt eingesetzt werden.

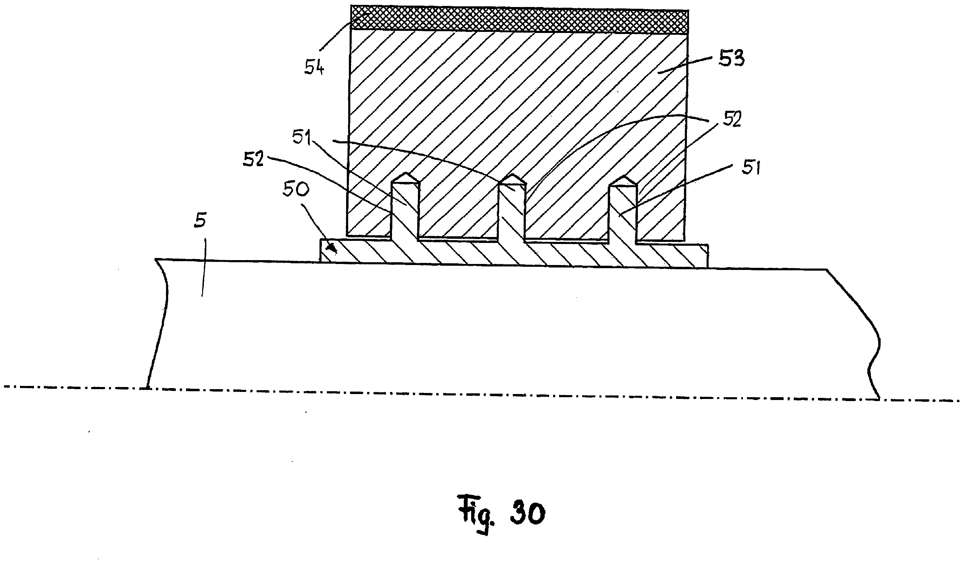

Beim Ausführungsbeispiel gemäß Fig. 30 sitzt auf der Welle 5 eine Laufhülse 50, die zusammen mit der Welle 5 im Einsatz dreht und das Wellenerdungselement bildet. Die Laufhülse 50 besteht aus elektrisch leitendem Material. Die Laufhülse 50 kann aus starrem, aber auch aus elastischem, leitfähigem Material hergestellt sein.

Die Laufhülse 50 ist über ihre axiale Länge mit radial abstehenden Ringflanschen 51 versehen, die vorteilhaft einstückig mit der Laufhülse 50 ausgebildet sind und axialen Abstand voneinander haben.

Die Ringflansche 51 greifen in Ringnuten 52 ein, die jeweils in Radialebenen liegen und in einer Hülse 53 vorgesehen sind. Die Ringnuten 52 und die Ringflansche 51 sind so aufeinander abgestimmt, dass die Ringflansche 51 mit ihren Außenseiten an den Innenseiten der Ringnuten 52 anliegen. Vorteilhaft sind die Außen- und/oder Innenseiten mit einer Oberflächenstruktur/-textur und/oder mit Poren versehen.

Die Hülse 53 besteht aus elektrisch leitendem Material und ist beispielsweise durch eine Edelstahlhülse gebildet. Sie ist an ihrer Außenseite mit einer Beschichtung 54 versehen, die vorzugsweise durch eine galvanisch aufgebrachte Silberschicht gebildet ist. Die elektrisch leitende Beschichtung 54 kann auch aus jedem anderen geeigneten Material bestehen. Die Hülse 53 ist in geeigneter Weise mit einem (nicht dargestellten) Gehäuse elektrisch leitend verbunden, das aus elektrisch leitendem Material besteht. Somit kann die Ableitung von der Welle 5 über die Laufhülse 50 und die Hülse 53 mit der Beschichtung 54 auf das Gehäuse zuverlässig durchgeführt werden.

Bei dieser Ausführungsform erfolgt die Kontaktierung zwischen der Laufhülse 50 und der Hülse 53 über die Ringflansche 51 axial.

Die Kontaktflächen zwischen den Ringflanschen 51 und den Seitenwänden der Ringnuten 52 sind so gestaltet, dass der Verschleiß minimal ist. Beispielsweise können die Außenseiten der Ringflansche 51 und/oder die Seitenwände der Ringnuten 52 mit einer entsprechenden Gleitschicht versehen sein.

Die Hülse 53 umgibt im Übrigen die Laufhülse 50 mit radialem Abstand, so dass der Kontakt zwischen der Laufhülse 50 und der Hülse 53 ausschließlich über die Ringflansche 51 erfolgt.

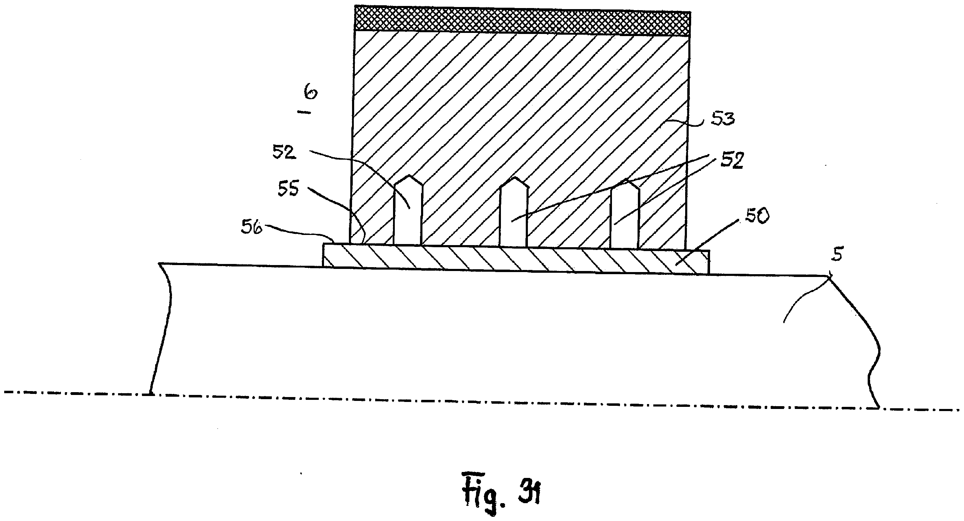

Die Ausführungsform gemäß Fig. 31 ähnelt dem vorigen Ausführungsbeispiel. Der Unterschied besteht darin, dass der Kontakt zwischen der Hülse 53 und der Laufhülse 50 radial erfolgt. Die Laufhülse 50 hat keine Ringflansche. Die Hülse 53 sitzt mit ihrer zylindrischen Innenwand 55 auf der äußeren Zylinderfläche 56 der Laufhülse 50. Die Innenwand 55 und/oder die Zylinderfläche 56 sind vorteilhaft mit einer elektrisch leitfähigen Gleitschicht sowie mit einer Oberflächenstruktur/-textur und/oder Poren versehen.

Aufgrund der Ringnuten 52, die entsprechend der vorigen Ausführungsform mit axialem Abstand voneinander angeordnet sind, ist einerseits die Kontaktfläche zwischen der Laufhülse 50 und der Hülse 53 gering, um größere Reibungsverluste zu vermeiden, andererseits aber so groß, dass eine sichere Ableitung der induzierten Spannungen, Ströme und Ladungen von der Welle 5 gewährleistet ist.

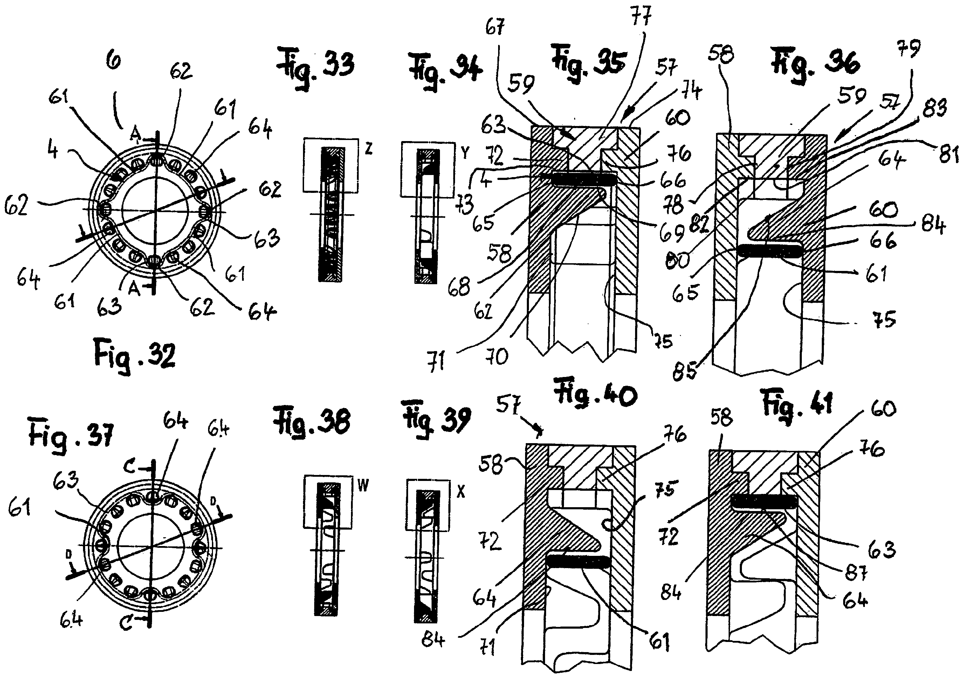

Die Wellenerdungseinrichtung 6 gemäß den Fig. 32 bis 36 hat ein Gehäuse 57, das aus drei Gehäuseteilen 58 bis 60 besteht (Fig. 35 und 36). Die Gehäuseteile 58 bis 60 sind so zusammengefügt, dass sie das über den Umfang geschlossene Gehäuse 57 bilden.

Im Gehäuse 57 ist als Wellenerdungselement der Wellenerdungsring 4 in Form eines Ableitbandes untergebracht. Es erstreckt sich über den Umfang des Gehäuses 57 und ist so im Gehäuse geführt, dass es mit Anlageteilen 61 an der (nicht dargestellten) und durch das Gehäuse 57 sich erstreckenden Welle anliegt. Der Wellenerdungsring 4 besteht aus elektrisch leitendem Material und leitet die induzierten Spannungen, Ströme und die Ladungen von der Welle auf das Gehäuse 57 ab.

Im Bereich zwischen den konvex gekrümmt verlaufenden Anlageteilen 61 ist der Wellenerdungsring 4 in noch zu beschreibender Weise über Umlenkteile 62 des Gehäuses 57 radial nach außen umgelenkt (Fig. 32). Der Wellenerdungsring 4 weist im Bereich dieser Umlenkteile 62 entsprechende Umlenkabschnitte 63 auf, die in Umfangsrichtung wesentlich kürzer sind als die Anlageteile 61, mit denen der Wellenerdungsring 4 an der Welle anliegt. Er verläuft infolge der beschriebenen Anordnung mäanderförmig im Gehäuse 57.

Wie aus Fig. 32 hervorgeht, hat das Gehäuse 57 im Bereich zwischen benachbarten Umlenkteilen 62 mehrere Abstützteile 64, an denen die Anlageteile 61 des Wellenerdungsringes 4 radial nach außen abgestützt sind. Im Ausführungsbeispiel sind jeweils drei solcher Abstützteile 64 zwischen jeweils zwei Umlenkteilen 62 vorgesehen. Vorteilhaft liegen die Anlageteile 61 und die Abstützteile 64 mit gleichem Abstand über den Umfang des Gehäuses 57 hintereinander.

Der Wellenerdungsring 4 in Form des Ableitbandes ist, ähnlich wie der Wellenerdungsring 4 in Form des Federbleches gemäß den Fig. 21 bis 23, hochkant angeordnet. Der Wellenerdungsring 4 ist somit stehend im Gehäuse 57 angeordnet (Fig. 35 und 36).

Der Wellenerdungsring 4 in Form des Ableitbandes hat im Schnitt etwa rechteckigen Umriss, wobei die beiden Längsränder 65, 66 des Wellenerdungsringes 4 vorteilhaft gekrümmt ausgebildet sind.

Die Umlenkteile 62 sind am Gehäuseteil 58 vorgesehen (Fig. 35). Der Gehäuseteil 58 ist im Wesentlichen als Ringscheibe ausgebildet und ist an seiner dem Gehäuseteil 60 zugewandten Seite mit den Umlenkteilen 62 versehen, die in Richtung auf den Gehäuseteil 60 axial vorstehen und vorteilhaft einstückig mit dem Gehäuseteil 58 ausgebildet sind.

Die Umlenkteile 62 sind mit Abstand vom äußeren Rand 67 des Gehäuseteiles 58 vorgesehen. Die Umlenkteile 62 haben eine im Axialschnitt axial verlaufende Anlagefläche 68, an der der Wellenerdungsring 4 bzw. sein Umlenkabschnitt 63 mit seiner der Achse des Gehäuses 57 zugewandten Seitenfläche 69 zur Anlage kommen kann.

Die Seitenfläche 68 geht gekrümmt in eine Schrägfläche 70 über, die ihrerseits stetig gekrümmt in eine Innenseite 71 des Gehäuseteiles 58 übergeht.

Zwischen dem äußeren Rand 67 und den Umlenkteilen 62 steht von der Innenseite 71 des Gehäuseteiles 58 ein ringförmiger Vorsprung 72 ab, der sich über den Umfang des Gehäuseteiles 58 erstreckt und sowohl Abstand vom äußeren Rand 67 als auch von der Anlagefläche 68 der Umlenkteile 62 hat. Die Umlenkteile 72 ragen axial über den Ringvorsprung 72.

Zwischen dem Vorsprung 72 und der Anlagefläche 68 des Umlenkteiles 62 wird eine Nut 73 gebildet, in welche der Wellenerdungsring 4 eingreift.

Der Gehäuseteil 60 ist ebenfalls im Wesentlichen als flache Ringscheibe ausgebildet und mit Abstand von ihrem äußeren Rand 74 an ihrer Innenseite 75 mit einem ringförmigen Vorsprung 76 versehen, der dem Vorsprung 72 des Gehäuseteiles 58 gegenüberliegt.

Die beiden ringförmigen Vorsprünge 72, 76 liegen auf gleicher radialer Höhe und mit axialem Abstand einander gegenüber. Wie die Fig. 35 und 36 zeigen, sind die beiden Vorsprünge 72, 76 gleich ausgebildet. Sie bilden Anschläge für den mittleren Gehäuseteil 59, der als Ring ausgebildet ist und T-förmigen Querschnitt hat. Mit seinem ringförmigen Steg 77 liegt der Gehäuseteil 59 auf den beiden Vorsprüngen 72, 76 auf, die mit ihren Stirnseiten 78, 79 am Fuß 80 des Gehäuseteiles 59 anliegen. Die radial innere zylindrische Mantelfläche 81 des Fußes 80 liegt in einer gemeinsamen Zylinderfläche mit den inneren zylindrischen Seitenflächen 82, 83 der Vorsprünge 72, 76. Dadurch bilden die drei Gehäuseteile 58, 60 eine koaxial zur Achse des Gehäuses 57 verlaufende innere Zylinderfläche.

Wie Fig. 32 zeigt, haben die Umlenkteile 62, in Axialrichtung der Wellenerdungseinrichtung 6 gesehen, etwa ovalen Umriss. Die Umlenkteile 62 sind mit einem solchen geringen Abstand zu den ringförmigen Vorsprüngen 72, 76 angeordnet, dass die Umlenkabschnitte 63 des Wellenerdungsringes 4 einwandfrei geführt sind.

Die Stützteile 64 werden durch axiale Vorsprünge des Gehäuseteiles 60 gebildet (Fig. 36), die grundsätzlich gleich ausgebildet sind wie die Umlenkteile 62 des Gehäuseteiles 58. Die Abstützteile 64, die vorteilhaft einstückig mit dem Gehäuseteil 60 ausgebildet sind, haben eine im Axialschnitt gerade Seitenfläche 84, die bogenförmig in eine Schrägfläche 85 übergeht, die ihrerseits bogenförmig in eine radial liegende Innenseite 86 des Gehäuseteiles 60 übergeht.

Die als Vorsprünge ausgebildeten Umlenkteile 62 und Abstützteile 64 erstrecken sich jeweils bis nahe an den gegenüberliegenden Gehäuseteil 60 bzw. 58.

Der Wellenerdungsring 4 liegt mit seinen Anlageteilen 61 an den Seitenflächen 84 der Abstützteile 64 an bzw. hat geringen Abstand von ihnen.

Die Seitenflächen 84 der Abstützteile 64 sind in Umfangsrichtung des Gehäuses vorteilhaft gekrümmt verlaufend ausgebildet, so dass die Anlageteile 61 des Wellenerdungsringes 4 an diesen Seitenflächen 84 flächig abgestützt werden können. Während die Seitenflächen 84 der Abstützteile 64 der Achse des Gehäuses 57 zugewandt sind, liegen die Anlageflächen 68 der Umlenkteile 62 auf der der Außenseite des Gehäuses 57 zugewandten Seite.

Da die Umlenkteile 62 und Abstützteile 64, in Radialrichtung gesehen, einander axial überlappen (Fig. 33 und 34), zeichnet sich die Wellenerdungseinrichtung 6 durch eine kompakte Bauform aus, insbesondere in ihrer Axialrichtung.

Die Umlenkteile 62 sind vorteilhaft gleich ausgebildet. Auch die Abstützteile 64 sind bevorzugt gleich ausgebildet. Wie aus Fig. 32 hervorgeht, ist der Anteil der Anlageteile 61 des Wellenerdungsringes 4 wesentlich größer als der Anteil der Umlenkabschnitte 63.

Der Zusammenbau der Wellenerdungseinrichtung 6 ist einfach möglich, da die Gehäuseteile 58 bis 60 durch einen einfachen Steckvorgang miteinander verbunden werden können. Der Wellenerdungsring 4 in Form des Ableitbandes lässt sich bei der Montage einfach im Gehäuse 57 montieren, bevor der endseitige Gehäuseteil 58 oder 60 montiert wird.

Die Gehäuseteile 58 bis 60 bilden ein geschlossenes Gehäuse mit einem zylindrischen Außenmantel.

Bei der Ausführungsform nach den Fig. 37 bis 41 ist der Wellenerdungsring 4 als Wellenerdungselement in Form des Ableitbandes so in das Gehäuse 57 eingelegt, dass die Anlageteile 61 einen wesentlich kleineren Teil bilden als die Umlenkabschnitte 63 (Fig. 37). In diesem Falle sind die Umlenkabschnitte 63 jeweils über drei nebeneinander liegende Vorsprünge geführt. An jedem vierten Vorsprung ist der Wellenerdungsring 4 zur Bildung seines für den Kontakt mit der Welle vorgesehenen Anlageteiles 61 radial innen um den entsprechenden Vorsprung geführt.

Wie die Fig. 38 und 40 zeigen, hat der Gehäuseteil 58 die von seiner Innenseite 71 axial abstehenden Abstützteile 64, die gleich ausgebildet sind wie die Abstützteile 64 des Gehäuseteiles 60 der vorigen Ausführungsform. Der Wellenerdungsring 4 ist an den Abstützteilen 64 radial innen herumgeführt, während er an den anderen Vorsprüngen 64 radial außen geführt ist.

Die Umlenkabschnitte 63 liegen im Bereich zwischen den ringförmigen Vorsprüngen 72, 76 der Gehäuseteile 58 und 60 und den Seitenflächen 84 der Abstützteile 64 (Fig. 41). Da sich die Vorsprünge 64 entsprechend der vorigen Ausführungsform bis nahe an den jeweils gegenüberliegenden Gehäuseteil 60 erstrecken, werden zwischen den ringförmigen Vorsprüngen 72, 76 und den Seitenflächen 84 Aufnahmeräume 87 gebildet, die sich in Umfangsrichtung des Gehäuses 57 erstrecken und durch welche der Wellenerdungsring 4 mit seinen Umlenkabschnitten 63 verläuft. Entsprechend der vorigen Ausführungsform hat der Wellenerdungsring 4 eine solche Breite, dass er an den parallel zueinander sich erstreckenden Innenseiten 71, 75 der beiden Gehäuseteile 58, 60 anliegt.

Die als Umlenkteile dienenden Vorsprünge 64 sind so angeordnet, dass ihre Seitenfläche 84 radial außen liegt (Fig. 41). Die Seitenflächen 84 der als Abstützteil dienenden Vorsprünge 64 hingegen sind radial innen angeordnet. (Fig. 40). Dem Wellenerdungsring 4 sind somit die gekrümmten, im Axialschnitt geraden Seitenflächen 84 zugeordnet, wie dies auch bei der vorigen Ausführungsform der Fall ist. Dadurch ist gewährleistet, dass der Wellenerdungsring 4 über seinen Umfang zuverlässig geführt und abgestützt ist.

Bei den Ausführungsformen gemäß den Fig. 32 bis 41 haben die Seitenflächen 84 der Abstützteile 64 kleineren radialen Abstand von der Achse der Wellenerdungseinrichtung 6 als die Anlagefläche 68 der Umlenkteile 62.

Das Ableitband als Wellenerdungsring 4 gemäß den Fig. 32 bis 41 ist ein elektrisch leitendes Band, das vorteilhaft aus einem mit einem Leitlack beschichteten Polymer besteht. Das Ableitband ist vorteilhaft perforiert und hat auf seiner Kontaktseite mit der Welle in vorteilhafter Weise eine Struktur, welche die Lauffläche der Welle mit einem ausreichenden Traganteil der leitenden Schicht berührt und dadurch den gewünschten, möglichst konstanten geringen Widerstand erzielt. Das Ableitband ist in der beschriebenen Weise mäanderförmig im Gehäuse 57 angeordnet. Die Oberflächenstruktur des Ableitbandes und der mäanderförmige Verlauf ergeben einen Traganteil der elektrisch leitenden Schicht, der ein optimales Verhältnis zwischen einer ausreichenden elektrischen Leitfähigkeit und einer minimalen Verlustleitung durch Reibung hat.

Anhand der Fig. 32 bis 41 sind beispielhaft zwei mögliche mäanderförmige Verläufe des Ableitbandes dargestellt und beschrieben worden. Durch die Form und die Anzahl der Umlenkungen des Ableitbandes, vorteilhaft abgestimmt auf die Breite und Dicke des Ableitbandes, ist der Einsatz der Wellenerdungseinrichtung 6 unabhängig von der Drehrichtung und nahezu unabhängig von den im Einsatz auftretenden Drehzahlen.

Das Ableitband stellt die Verbindung zwischen dem Gehäuse 57 und der drehenden Welle her. Das Ableitband ist zwischen den Gehäuseteilen 58 und 60 des Gehäuses 57 elektrisch leitend fixiert. Der die Welle berührende Teil des Ableitbandes kann je nach Anzahl der Umlenkabschnitte 63 großflächig oder auch nur linienförmig sein. Beim Ausführungsbeispiel nach den Fig. 32 bis 36 ist dieser Anteil besonders großflächig. Beim Ausführungsbeispiel nach den Fig. 37 bis 41 ist der Berühranteil des Ableitbandes mit der Welle sehr gering und nahezu linienförmig.

Der Berühranteil zwischen dem Ableitband und der Welle kann durch Strukturen in der leitenden Schicht des Ableitbandes erhöht oder reduziert werden.

Die Strukturen auf der Oberfläche des Ableitbandes können so geformt sein, dass sich eine abweisende Förderwirkung gegenüber Schmutz und Flüssigkeit ergibt. Die Perforation des Ableitbandes und die Prägestruktur wird in vorteilhafter Weise so ausgeführt, dass der geforderte Traganteil der leitenden Beschichtung des Ableitbandes über die Laufzeit der Wellenerdungseinrichtung 6 und unabhängig von der Drehzahl der Welle erhalten bleibt.

Im Folgenden werden Beispiele für die bei den Ausführungsbeispielen teilweise genannten Oberflächenstrukturen, Oberflächentexturen und Perforierungen angegeben. Diese Beispiele sind nicht beschränkend zu verstehen, sondern sollen aufzeigen, wie durch eine entsprechende Gestaltung des Wellenerdungselementes die beschriebenen Funktionen bzw. Eigenschaften des Wellenerdungselementes 4 beeinflußt werden können.

Fig. 42 zeigt den ringscheibenförmigen Wellenerdungsring 4, der an seiner Kontaktseite mit Oberflächenstrukturen versehen ist, wie sie beispielhaft in den Fig. 43a und 43b dargestellt sind. Dieser Strukturen wiederholen sich über den Umfang des Wellenerdungsringes 4 und sind jeweils mit Abstand längs des Umfanges voneinander angeordnet.

Die Oberflächenstruktur gemäß Fig. 43a hat einen in Umfangsrichtung des Wellenerdungsringes 4 verlaufenden Kanalabschnitte 88, der an beiden Enden stumpfwinklig in endseitige Kanalabschnitte 88a, 88b übergeht. Sie erstrecken sich in Richtung auf die Innenseite 89 des Wellenerdungsringes 4 und enden mit Abstand von ihr. Der parallel zur Innenseite 89 verlaufende Kanalabschnitt 88 erstreckt sich über einen Winkelbereich von beispielsweise etwas weniger als 60°.

Die Endabschnitte 88a, 88b sind nahe ihrer freien Enden mit jeweils einer Unterbrechung 90a, 90b versehen, die Stopper bilden.

Eine solche Oberflächenstruktur führt dazu, dass das Nassmedium, in welchem der mit dieser Oberflächenstruktur versehene Wellenerdungsring 4 liegt, nicht zu weit radial nach außen gelangt, sondern über die Kanalabschnitte stets in Richtung auf die Welle zurückgeführt wird, an der der Wellenerdungsring 4 anliegt.

Fig. 43b zeigt die Möglichkeit, im Bereich zwischen dem Kanalabschnitt 88, 88a, 88b und der Innenseite 89 des Wellenerdungsringes 4 Strukturelemente 91 vorzusehen. Sie können so ausgebildet und/oder angeordnet sein, dass sie die Rückführung des Nassmediums begünstigen. Die Strukturelemente 91 können Vertiefungen oder Erhöhungen in der Oberseite des Wellenerdungsringes 4 sein.

Fig. 44 zeigt ein weiteres Ausführungsbeisüiel für eine Oberflächenstruktur, die bei den Wellenerdungsringen gemäß den 24 bis 29 vorgesehen sein kann. Diese Oberflächenstruktur ist an dem an der Welle 5 anliegenden, elastisch verformten Bereich des Wellenerdungsringes 4 auf der der Welle 5 zugewandten Seite vorgesehen. Benachbart zum freien Rand des auf der Welle 5 aufliegenden Teils des Wellenerdungsringes 4 ist ein umlaufender, durch eine Erhöhung gebildeter Ring 92 vorgesehen.

Er weist mit Abstand voneinander liegende, sichelförmige Einwölbungen bildende Abschnitte 93 auf, die vom freien Rand weggerichtet sind. In dem Bereich, in dem die Enden der Einwölbungen 93 in den Ring 92 übergehen, sind entgegengesetzt zueinander verlaufende, durch Erhöhungen gebildete, gerade Elemente 94, 95 vorgesehen. Sie erstrecken sich vom freien Rand des Wellenerdungsringes 4 weg.

Die beiden Elemente 94, 95 sind durch eine schmale Rippe 96 miteinander verbunden, die sich parallel zum Ring 92 erstreckt.

Mit Abstand zum Ring 92 ist auf der vom freien Rand abgewandten Seite ein weiterer umlaufender Ring 97 vorgesehen, der mit Abstand voneinander liegende Auswölbungen 98 aufweist. Sie sind in Richtung auf den freien Rand des Wellenerdungsringes 4 gerichtet und liegen jeweils benachbart zu den Einwölbungen 93 des Ringes 92.

Im Bereich zwischen den Auswölbungen 98 sind sichelförmige Erhöhungen 99 vorgesehen, die in Höhe der Einwölbungen 93 liegen und vom freien Rand des Wellenerdungsringes 4 weg gekrümmt verlaufen.

Mit einer solchen Oberflächenstruktur kann erreicht werden, dass, ähnlich wie bei einer Radialwellendichtung, das Nassmedium, das unter dem auf der Welle 5 aufliegenden Teil des Wellenerdungsringes 4 gelangt ist, wieder zurückgeleitet wird.

Fig. 45 zeigt ein Beispiel für eine Oberflächentextur. In der der Welle 5 zugewandten Seite des Wellenerdungsringes 4 befinden sich Mikrostrukturen 100, 101, die spiegelsymmetrisch zueinander gekrümmt sind und Abstand voneinander haben. Diese Mikrostrukturen 100, 101 sind über den Umfang des Wellenerdungsringes 4 jeweils mit Abstand voneinander angeordnet. Infolge der spiegelsymmetrischen Gestaltung der Mikrostrukturen 100, 101 wird erreicht, dass unabhängig von der Drehrichtung der Welle 5 ein darauf sich befindender Ölfilm zuverlässig durchgetrennt bzw. aufgerissen werden kann. Dadurch ist eine einwandfreie Ableitung der induzierten Spannungen, Ströme und elektrischer Landungen von der Welle 5 auch im Nassbereich gewährleistet. Zudem wird durch die spiegelsymmetrische Gestaltung der Mikrostrukturen 100, 101 erreicht, dass das Durchtrennen des Ölfilmes unabhängig von der Drehrichtung der Welle 5 ist.

Die Mikrostrukturen 100, 101 können Erhöhungen oder Vertiefungen im Wellenerdungsring 4 sein. Die Höhe bzw. Tiefe liegt beispielsweise in einem Bereich von etwa 0,05 mm bis 0,5 mm.

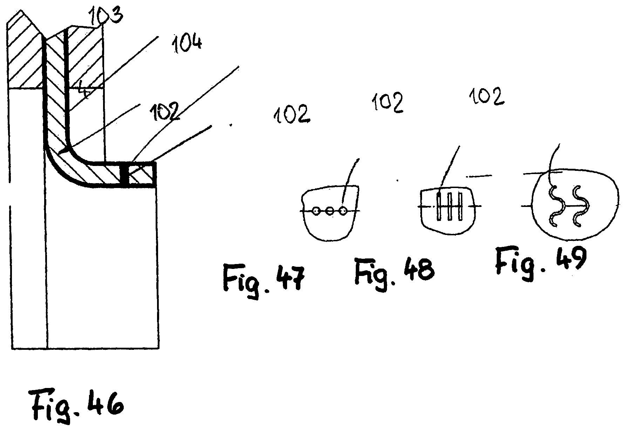

Ein Beispiel für ein für eine Perforierung zeigen die Fig. 46 bis 49. Der Wellenerdungsring 4 ist an seinem elastisch gebogenen und auf der Welle 5 aufliegenden Teil mit einer Perforierung 102 versehen. Die Perforierung 102 bietet sich dann an, wenn der Wellenerdungsring 4 mit einer elastisch leitenden Beschichtung 103 versehen ist. Sie kann beispielsweise ein Silberlack sein, der dauerhaft auf den Wellenerdungsring 4 aufgebracht ist. Aufgrund der elektrisch leitenden Beschichtung 103 muss der Grundkörper des Wellenerdungsringes 4 selbst nicht aus elektrisch leitfähigem Material bestehen.

Die Perforierung 102 wird durch Durchbrechungen gebildet, die über den Umfang des Wellenerdungsringes 4 verteilt angeordnet und mit elektrisch leitfähigem Material 104 gefüllt sind. Es ist vorteilhaft das gleiche Material, aus dem die Beschichtung 103 gebildet ist.

Die Fig. 47 bis 49 zeigen unterschiedliche Gestaltungen der Perforierung 102.

Gemäß Fig. 47 haben die Perforierungen 102 kreisförmigen Querschnitt und sind in Umfangsrichtung des Wellenerdungsringes mit Abstand hintereinander angeordnet.

Bei der Ausführungsform gemäß Fig. 48 sind die Perforierungen 102 längliche, radial verlaufende Schlitze.

Die Perforierungen 102 gemäß Fig. 49 sind radial verlaufend wellenförmig ausgebildet.

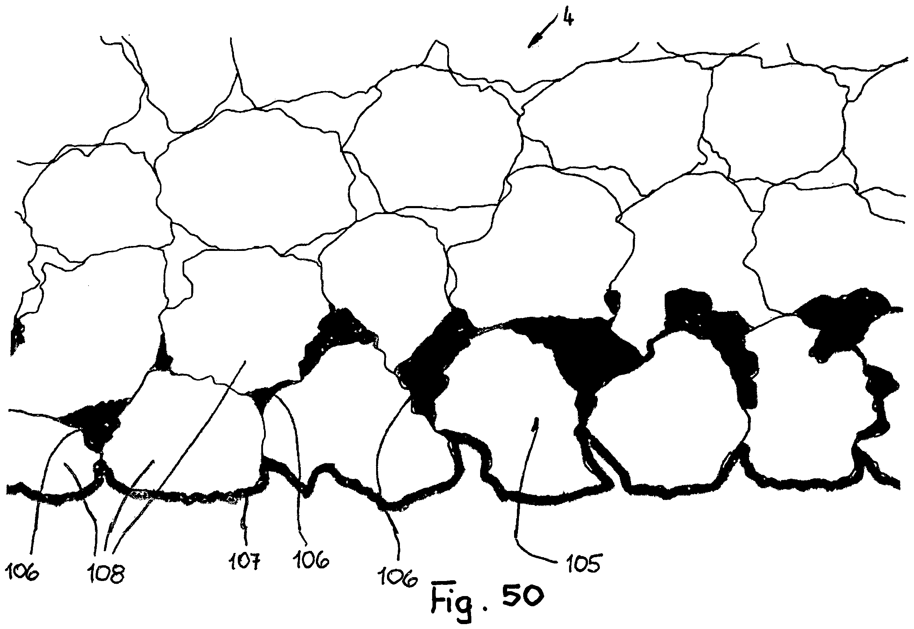

Die Fig. 50 bis 52 zeigen die Möglichkeit, eine elektrisch leitende Beschichtung dadurch am Wellenerdungsring 4 vorzusehen, dass der Grundkörper des Wellenerdungsringes 4 zumindest an der Außenseite eine poröse Werkstoffstruktur hat, an welcher die elektrisch leitende Beschichtung gehalten wird.

Bei der Ausführungsform nach Fig. 50 hat der Wellenerdungsring 4 den Grundkörper 105, der zumindest an seiner mit der Welle 5 in Kontakt kommenden Außenseite eine poröse Struktur hat. Sie zeichnet sich dadurch aus, dass sie Poren 106 zwischen Körnern 108 des Grundkörpers 105 aufweist, die von der Oberseite des Grundkörpers 105 ausgehend sich über eine gewisse Tiefe oder auch über die gesamte Tiefe des Grundkörpers 105 erstrecken. Auf die poröse Oberseite des Wellenerdungsringes 4 wird eine Beschichtung 107 aufgebracht, die aus elektrisch leitendem Material besteht, vorteilhaft aus Silber. Für die Beschichtung 107 kann jeder andere geeignete, elektrisch leitende Werkstoff herangezogen werden.

Aufgrund der Porenstruktur dringt die Beschichtung 107 von der Oberseite ausgehend in die Poren 106 ein.

Die Beschichtung 107 ist so vorgesehen, dass sie an der Oberseite des Wellenerdungsringes 4 eine durchgehend geschlossene Schicht bildet. Dann ist eine zuverlässige Ableitung der elektrischen Ladungen/Spannungen/Ströme von der Welle 5 sichergestellt.

Die Beschichtung 107 kann auch so aufgebracht sein, dass sie die Oberseite des Wellenerdungsringes 4 zumindest weitgehend bedeckt. Sollte die Beschichtung 107 kleinere Unterbrechungen aufweisen, ist dennoch eine ausreichende Ableitung gewährleistet, solange eine durchgehende Ableitung von der Welle 5 auf den Wellenerdungsring 4 gewährleistet ist.

Wie Fig. 50 zeigt, dringt das Material der Beschichtung 107 auch teilweise in die innerhalb des Grundkörpers 105 befindlichen Poren 106 ein. Dadurch bleibt die Ableitungsfunktion des Wellenerdungsringes 4 selbst dann aufrechterhalten, wenn er einem geringen Verschleiß an der Oberseite unterliegen sollte.

Die Poren 106 werden durch das Material der Beschichtung 107 vorteilhaft vollständig ausgefüllt, wodurch die Beschichtung 107 zuverlässig am Grundkörper 105 verankert wird.

Die Porenstruktur führt zu einer Vergrößerung der Oberfläche des Grundkörpers 105. Dementsprechend hat auch die Beschichtung 107 eine entsprechend große Oberfläche, so dass der Widerstand gering ist, was sich vorteilhaft auf die Leiteigenschaft des Wellenerdungsringes 4 auswirkt.

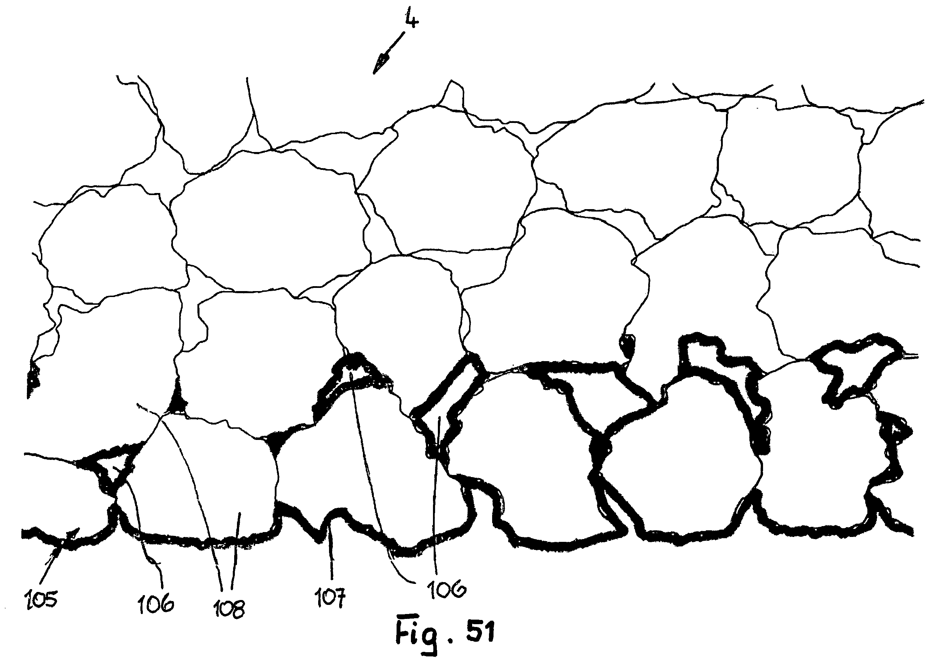

Fig. 51 zeigt die Möglichkeit, dass die Beschichtung 107 die Poren 106 nicht vollständig ausfüllt. Die einzelnen Körner 108 des Grundkörpers 105 werden durch die Beschichtung 107 zumindest weitgehend umhüllt.

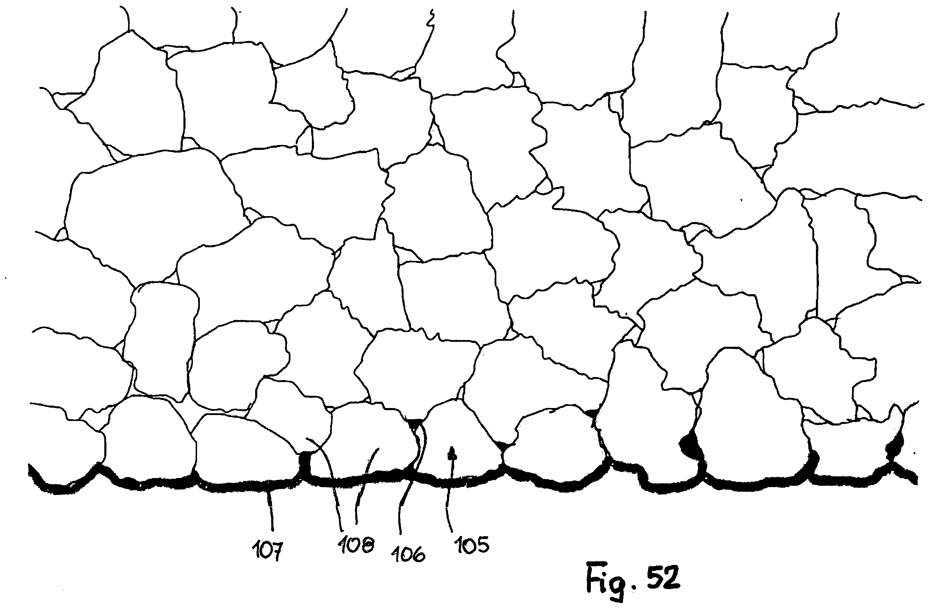

Wie Fig. 52 zeigt, kann die Beschichtung 107 auch so vorgesehen sein, dass sie im Wesentlichen nur an der Oberseite des Grundkörpers 105 und damit des Wellenerdungsringes 4 vorgesehen ist. Das Material der Beschichtung 107 ist nur wenig zwischen die Körner 108 des Grundkörpers 105 eingedrungen. Nur ein Teil der benachbart zur Oberseite liegenden Poren 106 ist mit dem Beschichtungsmaterial gefüllt.

## Patentansprüche

1. Wellenerdungseinrichtung zur Ableitung induzierter Spannungen, Ströme oder elektrischer Ladungen von einem ersten Maschinenelement (5), vorzugsweise einer Welle, in ein zweites Maschinenelement (1), mit mindestens einem Wellenerdungselement (4, 50) zur Ableitung,
**dadurch gekennzeichnet, dass** das Wellenerdungselement (4, 50) ein von einem Ausgangsmaterial, vorzugsweise einer Endlosware, abgetrenntes Bauteil ist, das in seiner Längsrichtung von Kanälen (16) durchzogen oder zumindest an seiner Berührfläche mit dem ersten Maschinenelement (5) mit einer Perforierung und/oder einer Oberflächenstruktur und/oder einer Oberflächentextur versehen ist.

2. Wellenerdungseinrichtung nach Anspruch 1,
**dadurch gekennzeichnet, dass** die Oberflächenstruktur durch Poren gebildet ist.

3. Wellenerdungseinrichtung nach Anspruch 2,
**dadurch gekennzeichnet, dass** die Poren das Wellenerdungselement (4, 50) durchsetzen.

4. Wellenerdungseinrichtung nach einem der Ansprüche 1 bis 3,
**dadurch gekennzeichnet, dass** das Wellenerdungselement (4) ein strangförmiges Bauteil ist.

5. Wellenerdungseinrichtung nach Anspruch 2,
**dadurch gekennzeichnet, dass** das Wellenerdungselement (4) ein Hohlkörper ist, der vorzugsweise mit einem Medium gefüllt ist.

6. Wellenerdungseinrichtung nach Anspruch 4,
**dadurch gekennzeichnet, dass** das Wellenerdungselement (4) aus Vollmaterial besteht.

7. Wellenerdungseinrichtung nach einem der Ansprüche 1 bis 6,
**dadurch gekennzeichnet, dass** Wellenerdungselement (4) in einem Halter (1) angeordnet ist und zwischen einer Halterwand (2) und der Stirnseite (7) der Welle (5) liegt und vorzugsweise unter elastischer Verformung an einer Ringwand (3) des Halters (1) anliegt.

8. Wellenerdungseinrichtung nach einem der Ansprüche 1 bis 6,
**dadurch gekennzeichnet, dass** das Wellenerdungselement (4) in einer am Umfang der Welle (5) befindlichen Ringnut (10) angeordnet ist und an einem die Welle (5) mit Abstand umgebenden Gehäuse (12) anliegt.

9. Wellenerdungseinrichtung nach einem der Ansprüche 1 bis 8,
**dadurch gekennzeichnet, dass** das Wellenerdungselement (4) ein schwammartiger Ring ist.

10. Wellenerdungseinrichtung nach Anspruch 1,
**dadurch gekennzeichnet, dass** das Wellenerdungselement (4) ein Gewebeschlauchstück ist, das zumindest an seiner Mantelfläche elektrisch leitend ausgebildet ist, wobei die Struktur des Gewebes die Oberflächenstruktur des Wellenerdungselementes (4) bildet.

11. Wellenerdungseinrichtung nach einem der Ansprüche 1 bis 6,
**dadurch gekennzeichnet, dass** das Wellenerdungselement (4) tangential an der Welle (5) anliegt.

12. Wellenerdungseinrichtung nach einem der Ansprüche 1 bis 6,
**dadurch gekennzeichnet, dass** das Wellenerdungselement (4) die Welle (5) über einen Teil ihres Umfanges umgibt.

13. Wellenerdungseinrichtung nach einem der Ansprüche 1 bis 12,
**dadurch gekennzeichnet, dass** das Wellenerdungselement (4) mäanderförmig in einen Halter (26) derart eingelegt ist, dass radial nach innen vorstehende Abschnitte (36) an der Welle (5) anliegen.

14. Wellenerdungseinrichtung nach einem der Ansprüche 1 bis 3 oder 13, **dadurch gekennzeichnet, dass** das Wellenerdungselement (4) ein Federblech oder ein elektrisch leitendes Ableitband ist.

15. Verfahren zur Herstellung einer Wellenerdungseinrichtung nach einem der Ansprüche 1 bis 14,
**dadurch gekennzeichnet, dass** von einem Ausgangsmaterial, vorzugsweise einer Endlosware, zur Bildung des Wellenerdungselementes (4, 50) ein Stück in der erforderlichen Länge abgetrennt wird.
